(19) Europäisches Patentamt
European Patent Office
Office européen des brevets

(11) **EP 3 788 802 B1**

(12) **EUROPÄISCHE PATENTSCHRIFT**

(45) Veröffentlichungstag und Bekanntmachung des Hinweises auf die Patenterteilung:
**28.12.2022   Patentblatt 2022/52**

(21) Anmeldenummer: **19703315.2**

(22) Anmeldetag: **05.02.2019**

(51) Internationale Patentklassifikation (IPC):
**H04R 25/00** *(2006.01)*      **G01C 21/16** *(2006.01)*

(52) Gemeinsame Patentklassifikation (CPC):
**H04R 25/40;** G01C 21/16; H04R 2225/41

(86) Internationale Anmeldenummer:
**PCT/EP2019/052774**

(87) Internationale Veröffentlichungsnummer:
**WO 2019/211016 (07.11.2019 Gazette 2019/45)**

(54) **VERFAHREN ZUM BETRIEB EINES HÖRGERÄTS UND HÖRGERÄT**

METHOD FOR OPERATING A HEARING AID, AND HEARING AID

PROCÉDÉ POUR FAIRE FONCTIONNER UNE PROTHÈSE AUDITIVE ET PROTHÈSE AUDITIVE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **04.05.2018   DE 102018206975**

(43) Veröffentlichungstag der Anmeldung:
**10.03.2021   Patentblatt 2021/10**

(73) Patentinhaber: **Sivantos Pte. Ltd.**
**Singapore 539775 (SG)**

(72) Erfinder:
• **KÜBERT, Thomas**
**97816 Lohr (DE)**
• **WURZBACHER, Tobias**
**90768 Fürth (DE)**

(74) Vertreter: **FDST Patentanwälte**
**Nordostpark 16**
**90411 Nürnberg (DE)**

(56) Entgegenhaltungen:
CN-A- 103 745 507      DE-A1-102015 219 572
US-A1- 2012 114 132    US-A1- 2015 230 036

**Beschreibung**

Die Erfindung betrifft ein Verfahren zum Betrieb eines Hörgeräts sowie ein Hörgerät, das insbesondere zur Durchführung des Verfahrens eingerichtet ist.

Hörgeräte dienen insbesondere in Form von Hörhilfegeräten Personen mit einer Hörminderung dazu, die Hörminderung zumindest teilweise auszugleichen. Dazu umfassen übliche Hörgeräte regelmäßig wenigstens ein Mikrofon zur Erfassung von Geräuschen aus der Umgebung sowie einen Signalverarbeitungs-Prozessor, der dazu dient, die erfassten Geräusche zu verarbeiten und dabei insbesondere in Abhängigkeit von der individuellen Hörminderung (insbesondere frequenzspezifisch) zu verstärken und/oder zu dämpfen. Die verarbeiteten Mikrofonsignale werden von dem Signalverarbeitungs-Prozessor an einem Ausgabewandler - meist in Form eines Lautsprechers - zur Ausgabe an das Gehör des jeweiligen Hörgeräteträgers weitergeleitet. Je nach Art der Hörminderung kommen als Ausgabewandler auch sogenannte Knochenleitungshörer oder Cochlea-Implantate zur mechanischen bzw. elektrischen Stimulation des Gehörs zum Einsatz. Unter den Begriff Hörgerät werden aber auch andere Geräte wie beispielsweise Kopfhörer, sogenannte Tinnitus-Masker oder Headsets zusammengefasst.

Insbesondere Hörhilfegeräte weisen häufig einen sogenannten Klassifikator auf, der dazu dient, insbesondere anhand der erfassten Geräusche auf bestimmte, vordefinierte "Hörsituationen" zu schließen. In Abhängigkeit von der erkannten Hörsituation wird dann regelmäßig die Signalverarbeitung verändert. Da häufig aufgrund der vorliegenden Hörminderung das Sprachverstehen des Hörgeräteträgers beeinträchtigt ist, sind die in dem Signalverarbeitungs-Prozessor hinterlegten (Signalverarbeitung-) Algorithmen meist darauf abgestimmt, die Sprachäußerungen Dritter in den erfassten Mikrofonsignalen herauszuarbeiten und für den jeweiligen Hörgeräteträgers in einer möglichst verständlichen Form wiederzugeben. Zur Erkennung einer Gesprächssituation wird in dem Klassifikator häufig ein Spracherkennungsalgorithmus abgearbeitet. Ein solcher Algorithmus wird jedoch in Situationen ungenau, in denen in der näheren Umgebung des Hörgeräteträgers mehrere Personen sprechen, aber nicht alle an dem gleichen Gespräch teilnehmen. In diesem Fall ist eine akustische Identifikation der am selben Gespräch teilnehmenden Personen regelmäßig erschwert.

Aus DE 10 2015 219 572 A1 ist ein Verfahren zum Betrieb eines Hörgeräts bekannt, das einen Beschleunigungssensor aufweist, der im bestimmungsgemäßen Tragezustand am Kopf eines Hörgeräteträgers positioniert ist und der zur Messung in drei senkrecht aufeinander stehenden Messachsen eingerichtet ist. Anhand von durch ein Beschleunigungssignal transportierten Beschleunigungsdaten wird auf eine Bewegung des Hörgeräteträgers geschlossen. Aus den Beschleunigungsdaten wird eine Bewegungsrichtung der Bewegung ermittelt, anhand welcher auf ein Vorliegen einer Rotationsbewegung des Kopfs geschlossen wird. Dabei offenbart DE 10 2015 219 572 A1 eine binaurale Hörvorrichtung mit Beschleunigungssensoren, die auf unterschiedlichen Seiten des Kopfs angebracht sind, welche bei einer Drehbewegung jeweils eine Beschleunigung in unterschiedlichen Richtungen erfahren, wohingegen die Erdbeschleunigung für beide Beschleunigungssensoren in die gleiche Richtung erfolgt. Mittels Differenzbildung ist diese Anordnung zur Eliminierung erdbeschleunigungsabhängiger Signalanteile geeignet.

Der Erfindung liegt die Aufgabe zugrunde, einen verbesserten Betrieb eines Hörgeräts zu ermöglichen.

Diese Aufgabe wird erfindungsgemäß gelöst durch ein Verfahren mit den Merkmalen des Anspruchs 1. Des Weiteren wird diese Aufgabe erfindungsgemäß gelöst durch ein Hörgerät mit den Merkmalen des Anspruchs 26. Vorteilhafte und teils für sich erfinderische Ausführungsformen und Weiterbildungen der Erfindung sind in den Unteransprüchen und der nachfolgenden Beschreibung dargelegt.

Das erfindungsgemäße Verfahren dient zum Betrieb eines Hörgeräts, insbesondere eines Hörhilfegeräts. Das Hörgerät weist dabei einen Beschleunigungssensor auf, der im bestimmungsgemäßen Tragezustand am Kopf, insbesondere in oder an einem Ohr eines Hörgeräteträgers positioniert ist. Dieser Beschleunigungssensor ist dabei außerdem zur Messung in drei senkrecht aufeinander stehenden Messachsen eingerichtet, von denen vorzugsweise zwei im bestimmungsgemäßen Tragezustand zumindest grob (d.h. nicht zwingend exakt, insbesonderemeist aufgrund der individuellen Anatomie - näherungsweise, d.h. mit einer Abweichung von bis zu etwa 20 oder 30 Grad) in einer Transversalebene des Körpers des Hörgeräteträgers angeordnet sind. Das heißt insbesondere, dass diese beiden Messachsen der Transversalebene zugeordnet sind.

Verfahrensgemäß wird (insbesondere im bestimmungsgemäßen Betrieb des Hörgeräts) anhand von durch ein Beschleunigungssignal transportierten Beschleunigungsdaten des Beschleunigungssensors auf eine Bewegung des Hörgeräteträgers, also insbesondere ob sich der Hörgeräteträger überhaupt bewegt, geschlossen. Aus den Beschleunigungsdaten wird außerdem - insbesondere nur, wenn eine Bewegung erkannt wurde - eine Bewegungsebene der Bewegung des Hörgeräteträgers abgeleitet. Des Weiteren werden aus den Beschleunigungsdaten eine Bewegungsachse und eine Bewegungsrichtung der Bewegung ermittelt, sowie anhand der Bewegungsebene, der Bewegungsachse und der Bewegungsrichtung auf ein Vorliegen einer Rotationsbewegung des Kopfs geschlossen.

Unter dem Begriff "Transversalebene" wird hier und im Folgenden insbesondere eine senkrecht zu (Körper-)Längsachse des Hörgeräteträgers ausgerichtete Ebene verstanden. Diesem aus der Medizin entlehnten Begriff entsprechend wird hier und im Folgenden auch der Begriff "Sagittalebene" oder "Medianebene" verwendet, die somit insbesondere eine - bei aufrechter Körperhaltung und geradeaus gerichtetem Blick -den Körper des Hörgeräteträgers in einen linken und rechten Teil, im Fall der Medianebene in eine entsprechende Hälfte, teilen und senkrecht auf der Transversalebene stehen.

Unter dem Begriff Rotationsbewegung wird hier und im Folgenden insbesondere eine Drehung des Kopfs um eine (Körper-)Achse verstanden. Grundsätzlich werden solche Rotationsbewegungen des Kopfs im Rahmen der vorliegenden Beschreibung insbesondere in eine Gierbewegung, eine Nickbewegung und eine Rollbewegung unterteilt. Unter dem Begriff "Gierbewegung" oder "Gieren" wird dabei hier und im Folgenden insbesondere eine Rotation (Drehung) des Kopfs um eine (Körper-)Hochachse, also insbesondere um die von der Wirbelsäule gebildete Achse (die vorzugsweise zumindest näherungsweise mit der Vertikalen zusammenfällt) verstanden. Des Weiteren werden hier und im Folgenden insbesondere die Begriffe "Nicken" oder "Nickbewegung" für eine auf und ab um eine vorzugsweise zumindest grob in der Transversalebene liegende und insbesondere die Ohren des Hörgeräteträgers verbindende "Nickachse" gerichtete Bewegung, sowie "Rollen" oder "Rollbewegung" für eine seitwärts gerichtete Neigung oder Verkippung des Kopfs um eine vorzugsweise in Neutral-Blickrichtung (auch als "Null-Grad-Blickrichtung" bezeichnet) ausgerichtete "Rollachse", die vorzugsweise eine Schnittlinie der Transversal- und der Sagittalebene in Höhe etwa der Ohren bildet, verwendet. Die Rollachse liegt somit auch zumindest grob in der Transversalebene.

Optional wird die Bewegungsrichtung nur mittelbar bestimmt, bspw. mittels eines Rotationswinkels, bspw. eines Gierwinkels, der das Ausmaß der Rotationsbewegung (bspw. der Gierbewegung) um die jeweilige Bewegungsachse wiedergibt und über sein zugeordnetes Vorzeichen auch einen Drehsinn (und somit die Bewegungsrichtung) erkennen lässt.

Dadurch, dass zunächst "nur" ermittelt wird, ob überhaupt eine Bewegung des Hörgeräteträgers vorliegt, können optional nachfolgende Verfahrensschritte (bspw. zur Detektion der Rotationsbewegung) entfallen. Des Weiteren wird durch die Bestimmung der Bewegungsebene sowie der Bewegungsachse und der Bewegungsrichtung vorteilhaft ermöglicht, nur einen (einzigen) Beschleunigungssensor, der in (oder: entlang von) drei Messachsen misst, zur Detektion der Rotationsbewegung heranzuziehen, sodass der Einsatz von herkömmlicherweise verwendeten Messsystemen, die mehrere (insbesondere unterschiedliche) Sensoren, konkret eine Kombination von Beschleunigungssensoren mit Gyroskopen und/oder Magnetfeldsensoren (auch als "inertiale Messeinheiten" bezeichnet) verwenden, und der damit verbundene vergleichsweise hohe Energieverbrauch entfallen kann. Des Weiteren kann die erkannte Rotationsbewegung genutzt werden, um die Analyse von Hörsituationen oder die Einstellung von Signalverarbeitungsparametern zu unterstützen.

Vorzugsweise ist die dritte Messachse des Beschleunigungssensors in der bestimmungsgemäßen Trageposition etwa senkrecht zur Transversalebene ausgerichtet. Vorzugsweise handelt es sich bei dem eingesetzten Beschleunigungssensor um einen Beschleunigungssensor, in dem die der jeweiligen Messachse zugeordneten sensitiven Elemente integriert sind. Dies ist dahingehend vorteilhaft, da derartige "3D-Beschleunigungssensoren" als integrale Bauelemente erhältlich sind.

In einer weiteren bevorzugten Verfahrensvariante werden die Beschleunigungsdaten insbesondere auf das Vorliegen der Gierbewegung als Rotationsbewegung hin untersucht. Diese spiegelt häufig ein "Kopfzuwenden" bspw. im Rahmen einer Gesprächssituation wieder, so dass eine diesbezügliche Information vorteilhaft zur Einstellung von Signalverarbeitungsparametern insbesondere für eine Gesprächssituation mit mehreren Gesprächsteilnehmern genutzt werden kann. Alternativ oder zusätzlich werden die Beschleunigungsdaten insbesondere auf das Vorliegen der Nick- und/oder der Rollbewegung hin untersucht.

In einer weiteren zweckmäßigen Verfahrensvariante werden die Beschleunigungsdaten blockweise in aufeinanderfolgenden - gegebenenfalls einander überlappenden - Datenframes (also insbesondere mehrere Datensamples, die über ein vorgegebenes Zeitfenster hinweg erfasst werden) analysiert. Die Länge des jeweiligen Datenframes (d.h. des zugeordneten Zeitfensters) beträgt dabei etwa 0,5 bis 1,5 Sekunden. Vorzugsweise wird dabei eine Überlappung des nachfolgenden Zeitfensters mit dem vorangegangenen Zeitfenster von etwa 0,25-0,75 Sekunden angewendet. Die Länge des (jeweiligen) Zeitfensters ergibt sich dabei aus der Erkenntnis, dass eine übliche, bewusste Rotationsbewegung (bspw. die Gierbewegung) des Kopfs etwa 0,5 Sekunden bis zu etwa 1,5 Sekunden andauert. Insbesondere werden in dieser Verfahrensvariante von dem Beschleunigungssensor mit einer Frequenz von etwa 10-60 Hertz vorzugsweise von etwa 15-20 Hertz jeweils zwei bzw. drei Messwerte, die den zwei bzw. drei Messachsen zugeordnet sind, ausgegeben. Diese als Datensamples bezeichneten Messwertgruppen werden insbesondere in einem Pufferspeicher, der bspw. acht dieser Datensamples (die dann einen Datenframe bilden) fassen kann, zwischengespeichert. Eine sogenannte "Update-Rate" des Pufferspeichers beträgt dabei vorzugsweise etwa zwei Hertz.

In einer bevorzugten Verfahrensvariante wird insbesondere dann auf das Vorliegen der Bewegung des Hörgeräteträgers geschlossen, wenn ein vorgegebenes Kriterium erfüllt wird. Dieses Kriterium muss dabei insbesondere von einem zugeordneten, konkret aus den Beschleunigungsdaten extrahierten Merkmal (auch als "feature" bezeichnet) erfüllt werden. Vorliegend wird hierzu als ein solches Merkmal vorzugsweise ein (insbesondere gemessener, d. h. erfasster) Wertebereich und/oder eine Varianz des Beschleunigungssignals, vorzugsweise der in dem jeweiligen analysierten Datenframe enthaltenen Beschleunigungsdaten herangezogen. Zweckmäßigerweise wird in diesem Fall auf das Vorliegen der Bewegung (und somit auf Erfüllung des Kriteriums) geschlossen, wenn die Ausprägung des Merkmals (also insbesondere die Größe des Wertebereich bzw. der Wert der Varianz) sich von der jeweils zugeordneten für ein Messrauschen indikativen Ausprägung abhebt. Beispielsweise erfolgt hierzu ein Schwellwertvergleich. Diese Verfahrensvariante beruht auf der Annahme, dass die Beschleunigungsdaten bei fehlender Bewegung des Hörgeräteträgers insbesondere lediglich den Wert der Erdbeschleunigung, systematische Messfehler und Messrauschen enthalten. Dabei variiert mit hoher Wahrscheinlichkeit insbesondere nur das Messrauschen innerhalb eines Datenframes, so dass insbesondere die Varianz nur die Änderung des Messrauschens wiedergibt. In diesem Fall ist ein Schwellwertvergleich eine vergleichsweise einfache Variante zur Prüfung des Kriteriums auf Erfüllung durch das entsprechende Merkmal.

Insbesondere für eine Vorverarbeitung der Beschleunigungsdaten wird im bestimmungsgemäßen Tragezustand des Hörgeräts aus den Beschleunigungsdaten ein für eine Verdrehung der (drei) Messachsen des Beschleunigungssensors gegenüber der Transversalebene und/oder der Horizontalebene indikativer Rotationsoperator (im Folgenden als "Normierungs-Rotationsoperator" bezeichnet) ermittelt. Der Normierungs-Rotationsoperator enthält also Informationen, um welche Achse und um wieviel Grad das Messkoordinatensystem des Beschleunigungssensors gedreht werden muss, um vorzugsweise mit den zwei, der Transversalebene zugewiesenen Messachsen zur Deckung gebracht zu werden. Somit gibt dieser Normierungs-Rotationsoperator eine "feste" Verknüpfung des Messkoordinatensystems mit dem Körperkoordinatensystem (insbesondere in neutraler Körper- oder zumindest Kopfhaltung) wieder.

Als Rotationsoperator werden hier und im Folgenden beispielsweise eine Rotationsmatrix, Eulerwinkel oder ein vergleichbarer Operator herangezogen. Besonders bevorzugt wird hier und im Folgenden als Rotationsoperator aber (jeweils) eine Quaternion (in der vorstehend beschriebenen Verfahrensvariante als "Normierungs-Quaternion" bezeichnet) herangezogen. Zur Konstruktion der entsprechenden Quaternion wird dabei insbesondere eine sogenannte Quaternion-Achsen- Winkel-Formel herangezogen. Die Nutzung von Quaternionen für die (Beschreibung oder Parametrierung einer) Drehung von Körpern oder Daten ist dabei insbesondere hinsichtlich des Rechenaufwands und der Stabilität während der erforderlichen Rechenoperationen vorteilhaft.

Vorzugsweise wird die Verdrehung der Messachsen im vorliegenden Fall anhand des Kreuzprodukts und des Skalarprodukts zwischen dem aus den Beschleunigungsdaten ermittelten Gravitationsvektor und einem "globalen" Gravitationsvektor ermittelt. Der globale (oder auch: "ideale") Gravitationsvektor ist dabei einem "Welt-Koordinatensystem" zugeordnet, das als allgemeingültig angenommen wird. In diesem wird der globale Gravitationsvektor als "nach oben" weisend, d. h. insbesondere vertikal und vom Erdmittelpunkt nach außen ausgerichtet (g = [0, 0, 1]) angenommen, insbesondere da der Beschleunigungssensor die Erdbeschleunigung regelmäßig derart ausgibt. Zur Bestimmung der Verdrehung wird weiter angenommen, dass, wenn der Kopf (und insbesondere der ganze Körper des Hörgeräteträgers) sich in der neutralen ("aufrechten") Position befindet, das Kopf- und Welt-Koordinatensystem gleich ausgerichtet sind. In diesem Fall fällt die Transversalebene des Körpers zumindest näherungsweise mit der Horizontalebene zusammen. Mittels des Kreuzprodukts wird dabei eine Kippachse, um die herum die "Verdrehung" bei der Korrektur (oder: Normierung) erfolgen muss, ermittelt, und anhand des Skalarprodukts der Winkel, um den die Verdrehung um die Kippachse für die Korrektur erfolgen muss, ermittelt. D. h. zwischen dem gemessen Wert der Gravitation im Sensor-Koordinatensystem und dem als ideal angesetzten Gravitationsvektor im Welt-Koordinatensystem wird das Kreuz- und Skalarprodukt berechnet und daraus wird der Normierungs-Rotationsoperator, insbesondere die Normierungs-Quaternion ermittelt.

In einer zweckmäßigen Verfahrensvariante werden die Beschleunigungsdaten geglättet, d.h. gegebenenfalls vorhandene Signalspitzen werden entfernt, insbesondere indem ein Medianfilter eingesetzt wird. Dessen Anwendung, insbesondere dessen Parametrierung hängt dabei insbesondere von der Länge des Datenframes ab und wird auf bspw. drei Datensamples gesetzt. Weitere Filter sind aber ebenfalls denkbar.

In einer bevorzugten Verfahrensvariante werden aus den Beschleunigungsdaten für die entsprechende Rotationsbewegung eine radial zum Kopf des Hörgeräteträgers gerichtete Beschleunigung (im Folgenden kurz: "Radial-Beschleunigung") und eine tangential gerichtete Beschleunigung (im Folgenden auch kurz als "Tangential-Beschleunigung" bezeichnet) abgeleitet. Für den - zweckmäßigen - Fall, dass eine der der Transversalebene zugeordneten Messachsen im bestimmungsgemäßen Tragezustand auch - zumindest etwa - entlang einer Tangente des Kopfs ausgerichtet ist, zeigen die dieser Messachse zugeordneten Beschleunigungsdaten - bei einer Gierbewegung des Kopfs - zweckmäßigerweise einen hohen Anteil der Tangential-Beschleunigung. In diesem Fall zeigt die zweite der Transversalebene zugeordnete Messachse insbesondere einen hohen Anteil der Radial-Beschleunigung. Deshalb wird in einer zweckmäßigen Untervariante als für die Gierbewegung indikatives Merkmal ein zeitlicher Verlauf der mittels der der Transversalebene zugeordneten Messachsen ermittelten Tangential- und der Radial-Beschleunigung betrachtet und ausgewertet. Als Kriterium für das Vorliegen der Gierbewegung wird in diesem Fall herangezogen und betrachtet, ob der zeitliche Verlauf der Tangential-Beschleunigung innerhalb eines vorgegebenen Bewegungszeitfensters aufeinanderfolgend zwei entgegengesetzt gerichtete lokale Extrema (also bspw. ein lokales Maximum und ein lokales Minimum) aufweist. Insbesondere wird dabei betrachtet, ob im zeitlichen Verlauf die Tangential-Beschleunigung bei diesen beiden Extrema Werte mit entgegengesetzten Vorzeichen annimmt. Dies beruht auf der Erkenntnis, dass beim Gieren des Kopfs die Tangential-Beschleunigung zunächst eine "tatsächliche" Beschleunigung und anschließend eine "negative" Beschleunigung (nämlich beim Abbremsen des Kopfs) mit einem jeweils zugeordneten Ausschlag (dem jeweiligen Extremum) im zeitlichen Verlauf anzeigt. Insbesondere in Abhängigkeit von der Ausrichtung der der Tangential-Richtung zugeordneten Messachse relativ zur tatsächlichen Bewegungsrichtung nimmt die Tangential-Beschleunigung somit beispielsweise zunächst positive Werte an und "wechselt" beim Abbremsen des Kopfs zu negativen Werten. Beim Gieren des Kopfs in die entgegengesetzte Richtung wechseln die Werte der Tangential-Beschleunigung entsprechend von negativ zu positiv. Das Bewegungszeitfenster ist in dieser Verfahrensvariante vorzugsweise an die Dauer einer - insbesondere bei einem Gruppengespräch - üblichen Kopf-Drehbewegung angepasst und weist vorzugsweise Werte zwischen 0,25 und 1,5 Sekunden, insbesondere von 0,5 bis zu 1 Sekunde auf. Vorzugsweise wird das Bewegungszeitfenster "geöffnet" (d. h. dessen Überwachung gestartet), wenn eine hinreichend signifikante Änderung der Werte der Tangential-Beschleunigung erkannt wird. Durch das Bewegungszeitfenster wird vorteilhafterweise eine (zeitliche) Begrenzung einer Betrachtung des Hauptmerkmals, insbesondere des zeitlichen Verlaufs der Tangential-Beschleunigung erreicht, sodass "Beschleunigungs-Ereignisse", die aufgrund ihrer vergleichsweise langen Dauer mit hoher Wahrscheinlichkeit keiner Kopfdrehung (also keinem Gieren) zuzuordnen sind, nicht berücksichtigt werden. Die Radial-Beschleunigung ist außerdem erkanntermaßen mit der bei einer Rotationsbewegung (insbesondere der Gierbewegung) zwangsläufig auftretenden Zentripetalkraft (oder der entgegengerichteten Zentrifugalkraft) verknüpft, so dass - bei einer zeitlichen Auswertung der Radial-Beschleunigung - zweckmäßigerweise als weiteres Merkmal untersucht wird, ob innerhalb des Bewegungszeitfensters ein lokales Extremum der Radial-Beschleunigung vorliegt. In Verbindung mit den beiden lokalen Extrema der Tangential-Beschleunigung lässt sich dabei vorteilhafterweise eine vergleichsweise hohe Wahrscheinlichkeit ableiten, dass nicht nur eine geradlinige Bewegung entlang einer der Messachsen vorliegt, sondern tatsächlich eine Rotationsbewegung, im Fall der der Transversalebene zugeordneten Messachsen die Gierbewegung des Kopfs.

Die vorstehend beschriebene Analyse der Beschleunigungsdaten hinsichtlich der Gierbewegung lässt sich entsprechend auch auf die Roll- und/oder Nickbewegung anwenden. Dabei werden jeweils Messachsen ausgewertet, die für die jeweilige Bewegungsebene beim Rollen bzw. Nicken als Radial- bzw. Tangential-Beschleunigungsachsen herangezogen werden können. So sind die auszuwertenden Messachsen beim Rollen insbesondere durch die etwa in einer Frontalebene des Körpers angeordneten Messachsen, und beim Nicken die etwa in der Sagittalebene angeordneten Messachsen. In letzterem Fall ist es vorteilhaft, den Beschleunigungssensor derart am Hörgerät anzuordnen, dass die der Vertikalen zugeordnete Messachse (insbesondere die etwa vertikal ausgerichtete Messachse) im bestimmungsgemäßen Tragezustand sich nicht mit der Nickachse des Kopfs schneidet. In diesem Fall ist diese Messachse zu einer Tangente des Kopfs in Nickrichtung Parallelen ausgerichtet. In beiden Fällen -d. h. bei der Auswertung hinsichtlich der Roll- bzw. Nickbewegung - wird zweckmäßigerweise der Einfluss der Erdbeschleunigung insbesondere dynamisch kompensiert, da sich dieser je nach Rotationswinkel des Kopfs ständig ändert. Hierzu wird optional der mittels des Normierungs-Rotationsoperators ermittelte Zusammenhang zwischen dem Sensor-Koordinatensystem und dem Welt-Koordinatensystem herangezogen. Weiter optional wird - insbesondere bei Verwendung eines binauralen Hörgerätesystems mit zwei im Wesentlichen baugleichen Hörgeräten und damit auch zwei Beschleunigungssensoren - eine binaurale Differenz der Beschleunigungsdaten beider Sensoren herangezogen, um den Einfluss der Erdbeschleunigung zu kompensieren.

In einer bevorzugten Weiterbildung wird die Bewegungsebene aus der Radial-Beschleunigung und der Tangential-Beschleunigung konstruiert, insbesondere indem diese gegeneinander in einem Diagramm aufgetragen werden. Die dabei angetragene Kurve der Radial- und der Tangential-Beschleunigung spannt dabei konkret die Bewegungsebene auf. Die Bewegungsebene (und somit auch die gesamten, in dem Beschleunigungssignal enthaltenen Beschleunigungsdaten) wird daraufhin - insbesondere unter Nutzung eines Rotationsoperators, bevorzugt einer Quaternion - derart gedreht, dass sie parallel zu einer von den zwei für die Erfassung der Radial-Beschleunigung und der Tangential-Beschleunigung herangezogenen Messachsen aufgespannten Messebene ausgerichtet ist. Dadurch werden die Radial- und die Tangential-Beschleunigung mit den beiden, die Messebene aufspannenden Messachsen verknüpft, insbesondere entsprechend parallel zu diesen ausgerichtet. Für den Fall, dass das Vorliegen der Gierbewegung untersucht wird, handelt es sich wie vorstehend beschrieben bei den für die Erfassung der Radial-Beschleunigung und der Tangential-Beschleunigung herangezogenen Messachsen insbesondere um die der Transversalebene zugeordneten Messachsen.

Da der Beschleunigungssensor zur Messung in den drei senkrecht zueinander stehenden Messachsen eingerichtet ist, sind die Beschleunigungsdaten und damit insbesondere auch die Bewegungsebene für die Gierbewegung aufgrund der Gravitation um ein korrespondierendes Maß von der der Transversalebene zugeordneten Messebene verschoben. Vorzugsweise erfolgt deshalb nach der "Richtigdrehung" der Bewegungsebene (auch: "Gierebene") parallel zur Transversalebene eine Projektion dieser in die Messebene. Insbesondere werden durch diese Verfahrensvariante die Beschleunigungsdaten von 3D auf 2D überführt. Aufgrund der Drehung der Bewegungsebene liegen zur weiteren Auswertung in der vorstehend beschriebenen Messebene die Beschleunigungsdaten vorzugsweise verlustfrei, zumindest nahezu verlustfrei vor, so dass eine besonders präzise nachfolgende Auswertung auf Basis der Beschleunigungsdaten, insbesondere der daraus abgeleiteten Bewegungsebene ermöglicht wird.

In einer zweckmäßigen Weiterbildung wird für die Drehung der Bewegungsebene die Verkippung der Bewegungsebene gegenüber der (vorstehend beschriebenen) Messebene ermittelt, indem eine Kurve, vorzugsweise eine Ellipse in einen Verlauf der gegeneinander aufgetragenen Radial- und Tangential-Beschleunigung gefittet (d. h. in den Verlauf oder die Kurve eingepasst) wird. Für die Fläche der gefitteten Ellipse ("Ellipsenfläche") wird anschließend ein Normalenvektor bestimmt und dieser, insbesondere der im Schwerpunkt der Ellipsenfläche angeordnete Normalenvektor, als Bewegungsachse (also insbesondere als Gier-, Roll- oder Nickachse) angenommen. Für diese Bewegungsachse (also für den Normalenvektor) wird daraufhin ein Kippwinkel gegenüber der Messebene (insbesondere gegenüber dem Normalenvektor der Messebene, vorzugsweise bei zur Transversalebene ausgerichtetem Messkoordinatensystem zum Normalenvektor der Transversalebene oder zum (gegebenenfalls globalen) Gravitationsvektor) ermittelt. Besonders bevorzugt wird aus der derart ermittelten Verkippung der Bewegungsachse ein Korrektur-Rotationsoperator, insbesondere eine Korrektur-Quaternion konstruiert, mittels dessen bzw. derer die Bewegungsebene auf einfache Weise auf die Messebene gedreht werden kann.

Besonders bevorzugt wird mittels der Bewegungsebene, insbesondere mittels der gefitteten Ellipse und der Bewegungsachse außerdem ein Bewegungs-Rotationsoperator, insbesondere eine Bewegungs-Quaternion für die aktuelle Bewegung des Kopfs des Hörgeräteträgers konstruiert. Hierzu wird insbesondere für die erkannte Rotationsbewegung ein Rotationswinkel aus der zugeordneten Tangential-Beschleunigung ermittelt. Insbesondere wird hierbei als Rotationswinkel ein Gierwinkel - der die Rotation des Kopfs um seine Hochachse (d. h. die vorstehend beschriebene Bewegungsachse) angibt - aus der Tangential-Beschleunigung (die wiederum vorzugsweise anhand einer der der Transversalebene zugeordneten Messachsen bestimmt wird) ermittelt. Optional wird als Rotationswinkel (zusätzlich oder alternativ zum Gierwinkel) ein Roll- und/oder ein Nickwinkel aus der jeweils zugeordneten Tangential-Beschleunigung ermittelt. Insbesondere wird dazu die entsprechende Tangential-Beschleunigung zwei Mal integriert, beispielsweise mittels eines Runge-Kutta-Verfahrens hoher Ordnung. Das Ergebnis der Integration wird anschließend vorzugsweise durch den (optional bei einer Erstanpassung der Hörgeräts vermessenen oder als bspw. Median einer Datenbank vermessener Köpfe hinterlegten) Kopfradius geteilt, um die "neue" oder aktuelle Winkelposition des Kopfs auf dem "virtuellen" Einheitskreis zu erhalten. Zweckmäßigerweise wird bei einer (Erst-) Anpassung des Hörgeräts an den Hörgeräteträger für jede der vorstehend beschriebenen Rotationsbewegungen auch jeweils ein Rotationsradius bestimmt, mit dem der Beschleunigungssensor relativ zu jeweiligen Rotationsachse, also der Gierachse, der Rollachse oder der Nickachse angeordnet ist. Dieser Rotationsradius entspricht insbesondere im Fall der Gier- und Rollbewegung regelmäßig dem Kopfradius für diese Rotationsbewegung und wird dabei optional zur Bestimmung der Winkelposition herangezogen. Im Fall der Nickbewegung ist dieser Rotationsradius üblicherweise kleiner als der tatsächliche Kopfradius, da der Beschleunigungssensor, insbesondere das diesen enthaltende Hörgerät regelmäßig am oder im Ohr getragen wird und somit vergleichsweise nahe an der Nickachse positioniert ist.

Alternativ kann im Rahmen der Erfindung die vorstehend beschriebenen Auswertung der Bewegung, insbesondere die Überprüfung auf das Vorliegen der Rotationsbewegung, vorzugsweise der Gierbewegung und die Ermittlung der neuen Winkelposition auch mittels anderer Schätzverfahren, bspw. mittels Regressionsmethoden wie einem nichtlinearen Autoregressions-Netzwerk mit exogenen Einträgen ("NARX"), einem rekurrenten neuronalen Netz ("RNN") oder einer "standard least squares" Regressionsmethode durchgeführt werden. Auch merkmalsbasierte Klassifikationsmethoden sind im Rahmen der Erfindung denkbar.

Zur Einsparung von Rechenkapazität während des Betriebs des Hörgeräts wird in einer zweckmäßigen Weiterbildung der Rotationswinkel für die Rotationsbewegung des Kopfs (insbesondere der Gierwinkel für die Gierbewegung) nur dann ermittelt, wenn auch tatsächlich das Vorliegen der entsprechenden Rotationsbewegung (also bspw. der Gierbewegung) erkannt wurde.

Zweckmäßigerweise wird als (optional weiteres) Merkmal für das Vorliegen der Rotationsbewegung, insbesondere der Gierbewegung, der Roll- und/oder der Nickbewegung des Kopfs des Hörgeräteträgers insbesondere eine Fläche (insbesondere der Flächeninhalt) der vorstehend beschriebenen Ellipse ermittelt und in Abhängigkeit von der Ausprägung des Merkmals (d.h. dem Wert des Flächeninhalts) auf das Vorliegen der Rotationsbewegung geschlossen. Der Flächeninhalt der Ellipse ist dabei indikativ für die Stärke der Rotationsbewegung. Insbesondere nimmt die Stärke der Rotationsbewegung mit zunehmendem Flächeninhalt ebenfalls zu, so dass bspw. ein Schwellwertvergleich zum Erkennen der Rotationsbewegung des Kopfs durchgeführt werden kann. Beispielsweise hebt sich eine Rotationsbewegung (insbesondere eine reine Gierbewegung) des Kopfs über die zugeordnete Stärke von einer Bewegung des gesamten Körpers (bspw. Aufstehen, Laufen, Hinsetzen etc.) oder auch anderen Kopfbewegungen wie z. B. ein Kopfsenken beim Essen ab, da hierbei meist geringere Werte für die Tangential-Beschleunigung erfasst werden. Dadurch wird also beispielsweise eine Unterscheidung einer Gierbewegung (insbesondere nur) des Kopfs von anderen Körperdrehungen ermöglicht.

Als ein alternatives oder zusätzliches Merkmal für das Vorliegen der Rotationsbewegung (bspw. der Gierbewegung) des Kopfs des Hörgeräteträgers wird in einer weiteren zweckmäßigen Verfahrensvariante aus der Tangential-Beschleunigung eine zugeordnete Intensität (oder auch "Stärke") und/oder eine Intensität einer Tangential-Geschwindigkeit abgeleitet. Insbesondere wird die jeweilige Intensität dabei durch Bestimmung der Norm des jeweiligen der Beschleunigung bzw. der Geschwindigkeit zugeordneten Vektors oder der jeweiligen Quaternion, bspw. mittels skalarer Multiplikation mit sich selbst ermittelt. Weist die Tangential-Beschleunigung bzw. die Tangential-Geschwindigkeit einen vorgegebenen Wert auf, wird dies - insbesondere analog zur vorstehenden Auswertung des Flächeninhalts der gefitteten Ellipse - insbesondere als Kriterium für das Vorliegen der Rotationsbewegung und/oder auch zur Abgrenzung gegenüber einer Bewegung des gesamten Körpers der Hörgeräteträgers herangezogen.

Um insbesondere bei der Ermittlung einer Gierbewegung, vorzugsweise einer aktuellen Gierposition des Kopfs systematische Fehler zur verringern und/oder zu vermeiden, wird in einer vorteilhaften Verfahrensvariante, insbesondere für den Fall, dass keine Bewegung des Hörgeräteträgers erkannt wird, eine Korrektur, insbesondere zunächst eine Identifikation eines Nickwinkels und/oder eines Rollwinkels des Kopfs durchgeführt. Diese Korrektur bzw. Identifikation erfolgt somit vorzugsweise in sogenannten statischen Datenframes. Systematische Einflüsse (ein sogenannter Bias), die häufig temperaturbedingten Änderungen unterworfen sind, ändern sich dabei erkanntermaßen im Vergleich zur Länge des jeweiligen Datenframes (in der Größenordnung von etwa 1 Sekunde) äußerst langsam, so dass diese für einen Datenframe als konstante Messwertverschiebung ("Offset") angenommen werden können. Die den statischen Datenframes zugeordneten Beschleunigungsdaten enthalten somit neben diesem Offset insbesondere nur den Einfluss der Gravitation und ein zusätzliches Messrauschen (bspw. durch weißes Gauss'sches Rauschen darstellbar) mit einem Mittelwert von null.

Vorzugsweise wird innerhalb des jeweiligen statischen Datenframes zunächst für die Beschleunigungsdaten ein Mittelwert gebildet, wodurch nur noch der vorstehend beschriebene Bias oder Offset in den Beschleunigungsdaten enthalten ist und somit identifiziert wird. Dieser Bias kann nun insbesondere in nachfolgenden Datenframes vorzugsweise durch Subtraktion entfernt werden.

Weiter wird zweckmäßigerweise (vor oder nach der vorstehend beschriebenen Mittelwertbildung) eine Bereinigung der Beschleunigungsdaten um den Einfluss der Gravitation durchgeführt. Insbesondere wird hierzu der Einfluss der Erdbeschleunigung auf die jeweiligen Messachsen - der bei bekannter Ausrichtung der Messachsen zum Welt-Koordinatensystem bekannt ist - subtrahiert.

In einer bevorzugten Ausgestaltung der vorstehend beschriebenen Verfahrensvariante zur Korrektur bzw. Identifikation des Nick- bzw. Rollwinkels werden die Beschleunigungsdaten, insbesondere der zugeordnete Mittelwert, vorzugsweise dessen zugeordneter Vektor des aktuellen (statischen) Datenframes mittels der Ausrichtungsinformation des vorausgehenden Datenframes (beispielsweise mittels des für diesen aufgestellten Korrektur-Rotationsoperators bzw. der Korrektur-Quaternion, oder eines anderen, als für die Ausrichtung der Kopfs im vorhergehenden Datenframe repräsentativ gesetzten Rotationsoperators) rotiert, insbesondere um die Beschleunigungsdaten parallel zur Mess- bzw. Transversalebene ausrichten zu können. Anschließend wird für die derart rotierten (auch "geschätzten") Beschleunigungsdaten vorzugsweise jeweils mittels des Kreuzprodukts und des Skalarprodukts eine Restabweichung der Ausrichtung im Vergleich zu dem vorausgegangenen Datenframe, insbesondere zum Gravitationsvektor des vorausgegangenen Datenframes (oder alternativ zum globalen Gravitationsvektor) und damit auch mittelbar zur realen Ausrichtung der Messachsen ermittelt. Konkret werden also vergleichbar zu der vorausgegangenen Beschreibung eine Korrektur-Achse und ein Korrektur-Winkel ermittelt.

Mittels dieser Korrektur-Achse und des Korrektur-Winkels (also mittels der ermittelten Restabweichung) wird vorzugsweise ein Abweichungs-Rotationsoperator, insbesondere eine Abweichungs-Quaternion konstruiert, die die Verkippung der Beschleunigungsdaten gegenüber dem vorausgegangenen Datenframe und somit auch die Abweichung hinsichtlich Nick- und Rollwinkel gegenüber dem vorausgegangenen Datenframe wiedergibt. Da in einem statischen Datenframe keine Bewegung vorliegen sollte, wird die jeweilige Abweichung hinsichtlich der Nick- und Rollwinkel insbesondere als Korrekturgröße genutzt.

In einer weiteren zweckmäßigen Verfahrensvariante wird insbesondere für den Fall, dass keine Bewegung des Hörgeräteträgers erkannt wird, eine Korrektur des Gierwinkels durchgeführt. Vorzugsweise wird dazu eine Hauptblickrichtung, die herkömmlicherweise in einer Sagittal-, konkret in der Medianebene des Hörgeräteträgers liegt, von dieser Sagittal- oder Medianebene des Körpers des Hörgeräteträgers weg zu einer aktuellen Blickrichtung hin angeglichen (auch: gedriftet). Anders ausgedrückt wird der aktuelle Wert des ermittelten Gierwinkels in Richtung null gedriftet. Dadurch wird die aktuelle Blickrichtung als Hauptblickrichtung insbesondere über einen Zeitraum von wenigstens einer Minute, insbesondere über mehrere Minuten hinweg, adaptiert. Dies ist insbesondere bei Vortrags- oder Besprechungssituationen (insbesondere mit einer Präsentation) von Vorteil, in der der Hörgeräteträger über einen vergleichsweise langen Zeitraum (wenigstens eine Minute, insbesondere mehrere Minuten) schräg zur Sagittal-Ebene zu den anderen Gesprächspartnern (mit vergleichsweise geringer Variation seiner Kopfhaltung) oder zu einer Leinwand hin blickt und nur gelegentlich und insbesondere kurzzeitig seinen Kopf anderen Teilnehmern zuwendet. Außerdem können dadurch auch eventuelle Fehler bei einer "Initialisierung" insbesondere eines Rotationsoperators, insbesondere einer Quaternion, der bzw. die für die Orientierung des Kopfs des Hörgeräteträgers indikativ ist (und für den bzw. die vorzugsweise bei der Initialisierung ein Gierwinkel von null Grad als Hauptblickrichtung angenommen wird, die aber nicht zwingend mit der Medianebene zusammenfallend muss), ausgeglichen ("nachkorrigiert") werden. Solche Fehler können beispielsweise aufgrund eines Fehlens eines absolut messenden Lagesensors, bspw. eines Magnetometers, auftreten.

Für die vorstehende Korrektur des Gierwinkels wird vorzugsweise ein als "gierfreier Rotationsoperator" bezeichneter Rotationsoperator ermittelt. Für den Fall, dass die Ausrichtungen und Drehungen des Kopfs bzw. des Hörgeräts im Raum mittels Quaternionen beschrieben werden, wird insbesondere eine "gierfreie Quaternion" ermittelt. Insbesondere wird hierzu der Gierwinkel bei dem vorstehend beschriebenen und mittels der Korrektur-Achse und des Korrektur-Winkels für die Korrektur des Nick- bzw. Rollwinkels konstruierten Abweichungs- Rotationsoperator (insbesondere bei der Abweichungs-Quaternion) auf null Grad gesetzt. Insbesondere wird dieser gierfreie Rotationsoperator also auf Basis des (optional globalen) Gravitationsvektors ermittelt. Anschließend wird zwischen diesem gierfreien Rotationsoperator und dem Abweichungs- Rotationsoperator (bei dem der Gierwinkel nicht verändert ist) sphärisch interpoliert und vorzugsweise der resultierende Rotationsoperator als neuer Abweichungs- Rotationsoperator gesetzt. Die Schrittweite der Interpolation wird dabei beispielsweise derart gewählt, dass die akustische Szene (auch: Hörsituation) noch hinreichend gut adaptiert werden kann, beispielsweise derart, dass die Interpolation zu einem vergleichsweise langsamen Drift des Gierwinkels führt. Bei einem aktuellen Gierwinkel von bspw. 45 Grad wird für eine langsame Drift gegen null Grad die Schrittweite z. B. auf ein Prozent gesetzt. Nach 100 Interpolations-Schritten wäre dann der Gierwinkel - bei unbewegtem Kopf - auf null Grad gedriftet. Bei einer Blocklänge (oder Länge der jeweiligen Datenframes) von einer Sekunde entspricht ein solcher vollständiger Drift somit einer Zeit von 100 Sekunden. Optional wird der ("adaptive") Prozentsatz für die Interpolation (sowie eine gegebenenfalls vorhandene Mindestschrittweite, um die der Gierwinkel in jedem Fall gedriftet werden soll) in Abhängigkeit von (insbesondere proportional zu) einer Größe eines Fehlers der Ebenenschätzung (insbesondere der Ermittlung der Bewegungsebene oder der Einpassung der Ellipse in den Verlauf der Radial- und Tangentialbeschleunigung, beschrieben durch einen beim "Fit" ermittelten Restfehler). Des Weiteren wird der Prozentsatz optional auch in Abhängigkeit einer Häufigkeit der Gierbewegung des Kopfs während der letzten Minuten (bspw. der letzten 2 bis 4 Minuten) variiert. In diesem Fall wird bspw. bei vergleichsweise vielen erkannten Gierbewegungen angenommen, dass entsprechend viele (kumulierte) Fehler vorliegen und deshalb zur Kompensation ein höherer Prozentsatz (z.B. zwei Prozent) angesetzt. Zusätzlich oder alternativ wird bei der Interpolation vorzugsweise ein maximaler Wertebereich für den Gierwinkel von 180 Grad (d. h. insbesondere von +/- 90 Grad) vorgegeben, da für eine reine Kopfdrehung (d. h. ohne zusätzliche Drehung des Oberkörpers) keine (zumindest keine wesentlich) größeren Drehungen des Kopfs möglich sind.

In einer bevorzugten Verfahrensvariante wird außerdem zur Bestimmung der aktuellen Ausrichtung des Kopfs insbesondere für jeden analysierten Datenframe ein neuer Orientierungs-Rotationsoperator (insbesondere eine Orientierungs-Quaternion) ermittelt. Dazu wird der vorausgehende (d. h. dem vorausgehenden Datenframe zugeordnete) Orientierungs-Rotationsoperator mit dem vorstehend beschriebenen Bewegungs-Rotationsoperator (der auf eine erkannte Bewegung, insbesondere auf eine erkannte Gierbewegung hin konstruiert wurde) oder mit dem vorstehend beschriebenen Abweichungs-Rotationsoperator (der entsprechend in einem statischen Datenframe ermittelt wurde) verrechnet. Insbesondere bei Verwendung von Quaternionen als Rotationsoperator wird die vorausgehende Orientierungs-Quaternion mit der Bewegungs- bzw. Abweichungs-Quaternion mittels einer Quaternion-Multiplikation kombiniert. Mittels dieses (neuen) Orientierungs-Rotationsoperators ist beispielsweise eine möglichst fehlerfreie Ermittlung und Subtraktion der Gravitation möglich, denn beim Einsatz von nur einem Beschleunigungssensor ist eine Kenntnis der tatsächlichen räumlichen Lage vorteilhaft, um die Gravitation präzise (insbesondere ohne Einfluss anderer Beschleunigungen) bestimmen zu können.

Wie aus der vorstehenden Beschreibung hervorgeht wird als jeweiliger Rotationsoperator, also insbesondere als Normierungs-, Korrektur-, Abweichungs-, Bewegungs- und/oder Orientierungs-Rotationsoperator vorzugsweise die korrespondierende Quaternion, also insbesondere die Normierungs-, Korrektur-, Abweichungs-, Bewegungs- bzw. Orientierungs-Quaternion erstellt.

Besonders bevorzugt wird zur Initialisierung des Orientierungs-Rotationsoperators, also insbesondere als erster Orientierungs-Rotationsoperator eine aufrechte und "neutrale" Kopfhaltung, also insbesondere ein Zusammenfallen der Null-Grad-Blickrichtung mit der Medianebene (und insbesondere geradeaus, d. h. vorzugsweise entlang der Transversalebene gerichtetem Blick) angenommen. Für die jeweiligen Gier-, Nick- und Rollwinkel wird dabei jeweils ein Wert von null gesetzt. Im Fall der Orientierungs-Quaternion wird dabei insbesondere die Einheitsquaternion herangezogen. Mithin wird hierbei angenommen, dass ein Gierwinkel von null Grad die Null-Grad-Blickrichtung (oder Hauptblickrichtung) darstellt, wobei der Gierwinkel aber nicht zwingend (je nach tatsächlicher Ausrichtung des Kopfs) auch mit der Medianebene zusammenfallen muss. Insbesondere in Kombination mit der vorstehend beschriebenen Korrektur des Gierwinkels (insbesondere dem Drift), können so Fehler zwischen der tatsächlichen Ausrichtung des Kopfs und der Medianebene vermieden oder zumindest (wie vorstehend beschrieben nachkorrigiert) werden. Eine genaue Ausrichtung der Null-Grad-Blickrichtung zur Medianeben kann somit vorteilhafterweise unterbleiben.

Vorzugsweise wird der Orientierungs-Rotationsoperator des vorhergehenden Datenframes im Rahmen der vorangehend beschriebenen Korrektur bzw. Identifikation des Nick- bzw. Gierwinkels zur Rotation des Mittelwerts, insbesondere des Mittelwertvektors des nachfolgenden statischen Datenframes (also als vorhergehende Ausrichtungsinformation) herangezogen.

In einer zweckmäßigen Verfahrensvariante wird auf Basis des (insbesondere jeweiligen neuen) Orientierungs-Rotationsoperators (vorzugsweise der Orientierungs-Quaternion) eine (insbesondere räumliche) Blickrichtungswahrscheinlichkeitsverteilung erstellt. Diese gibt insbesondere für jede Winkelposition (oder "Rotationsposition"; im Fall der Gierbewegung auch: "Gierposition") des Kopfs (insbesondere ausgehend von der Hauptblickrichtung, der insbesondere die Null-Grad-Position zugeordnet ist) eine Wahrscheinlichkeit dafür an, ob die tatsächliche Blickrichtung des Hörgeräteträgers innerhalb der vergangenen Zeit (bspw. während der letzten 1 bis 5 Minuten) entlang eines der jeweiligen Winkelposition zugeordneten Winkels verlief. Insbesondere bei einer Gesprächssituation mit mehreren Gesprächspartnern wird diese Blickrichtungswahrscheinlichkeitsverteilung mehrere, verschiedenen Winkelpositionen, insbesondere Gierpositionen zugehörige Ausschläge ("Peaks") aufweisen, da der Hörgeräteträger in einer solchen Situation seinen Kopf wechselnd den verschiedenen Gesprächspartnern zuwenden wird. Somit gibt die Blickrichtungswahrscheinlichkeitsverteilung auch einen räumlichen Interessensbereich wieder, in dem sich mit hoher Wahrscheinlichkeit die Gesprächspartner oder andere Schallquelle von Interesse für den Hörgeräteträger befinden.

Zur Erstellung der Blickrichtungswahrscheinlichkeitsverteilung wird in einer bevorzugten Weiterbildung zunächst ausgehend von der Hauptblickrichtung eine Gauss'sche Normalverteilung mit einer vorgegebenen Standardabweichung angesetzt. Für die Standardabweichung werden dabei Werte von etwa 5 bis 25 Grad, insbesondere 10 bis 15 Grad herangezogen. Für die insbesondere anhand des in vorstehender Weise ermittelten Rotationswinkels (insbesondere Gierwinkels) vorgegebene, aktuelle Winkelposition (insbesondere Gierposition) wird anschließend eine neue Normalverteilung mit vorgegebener Standardabweichung (insbesondere wiederum mit den vorstehen genannten Werten) gesetzt. Optional werden insbesondere vor dem Setzen der neuen Normalverteilung alle bisher angesetzten Wahrscheinlichkeitswerte für die bisher aufgetretenen Winkelpositionen einheitlich um einen vorgegebenen Wert verringert. Vorzugsweise wird die neu gesetzte Normalverteilung ebenfalls um einen zu der Verringerung der vorhergehenden Wahrscheinlichkeitswerte korrespondierenden Faktor gewichtet, so dass die kumulierte Summe aller in der Blickrichtungswahrscheinlichkeitsverteilung angetragenen Winkelpositionen eins ergibt. Durch diesen Schritt wird insbesondere ein (vorzugsweise zunehmendes) "Vergessen" vorhergehender (und insbesondere "alter") Winkelpositionen erreicht, indem die Wahrscheinlichkeit für das Vorliegen einer Winkelposition bei ausbleibender oder hinreichender Wiederholung aus der Blickrichtungswahrscheinlichkeitsverteilung "herauswandert". Dies führt vorteilhafterweise zu einer dynamischen (insbesondere selbsttätigen) Adaption an die tatsächliche Situation, in der sich der Hörgeräteträger aktuell befindet. Der Vorteil der vorstehend beschriebenen Ermittlung der Blickrichtungswahrscheinlichkeitsverteilung liegt außerdem insbesondere darin, dass nicht nur ein "konkreter" Wert der aktuellen Winkelposition (insbesondere des aktuellen Gierwinkels) herangezogen wird, sondern jeweils ein Band mehrerer Winkelwerte, die um den ermittelten (oder auch: geschätzten) Wert des aktuellen Rotationswinkels (insbesondere des aktuellen Gierwinkels) herum verteilt sind. Dadurch weisen Fehler bei der vorstehend beschriebenen Ermittlung des aktuellen Werts des Rotationswinkels eine vergleichsweise geringe Auswirkung auf, insbesondere da sie über einen größeren Winkelbereich "verschmiert" werden. Ferner dürfte regelmäßig der Hörgeräteträger nicht bei jedem Blick auf einen Gesprächspartner exakt die gleiche Winkelposition (insbesondere Gierposition) einnehmen, da er oder der Gesprächspartner sich bewegen, und auch der insbesondere akustische Interessensbereich meist nicht exakt entlang der Blickrichtung verläuft. Somit ist die Blickrichtungswahrscheinlichkeitsverteilung vergleichsweise robust gegenüber Fehlern.

In einer zweckmäßigen Weiterbildung wird der Wert der Standardabweichung für die Gauss'sche Normalverteilung variabel vorgegeben. Beispielsweise wird der Wert der Standardabweichung dabei an einen möglichen Fehler bei der Ermittlung des Gierwinkels angepasst. Zweckmäßigerweise wird die Standardabweichung (deren Wert) dabei gleichlaufend angepasst, so dass bei kleinen Fehlern der Wert entsprechen klein gesetzt wird und umgekehrt. Dadurch wird vergleichsweise großen Fehlern möglichst wenig Gewicht zugewiesen und die Aussage der Blickrichtungswahrscheinlichkeit (zumindest für diese Winkelposition) insbesondere "schwammiger". Als Maß für den Fehler wird beispielsweise eine Qualität des Ebenenfits, insbesondere des Fits der Ellipse auf die Beschleunigungsdaten herangezogen. Diese Qualität wird insbesondere durch einen Restfehler des Ebenen- bzw. Ellipsenfits abgebildet.

In einer zweckmäßigen Verfahrensvariante wird die Information über die Rotationsbewegung, insbesondere die Gierbewegung des Kopfs des Hörgeräteträgers, bspw. die aktuelle Gierposition, insbesondere die Blickrichtungswahrscheinlichkeitsverteilung zur Anpassung eines Signalverarbeitungsalgorithmus für eine Gruppengesprächssituation herangezogen. Insbesondere wird anhand der Blickrichtungswahrscheinlichkeitsverteilung ermittelt, in welchem Wertebereich des jeweiligen Rotationswinkels (insbesondere des Gierwinkels) die häufigsten Blicke (mit Kopfgierung) des Hörgeräteträgers lagen, und daraufhin bspw. ein Öffnungsbereich eines Richtkegels entsprechend angepasst (bspw. aufgeweitet oder verjüngt). Optional wird die Information über die Rotationsbewegung dabei zusätzlich zu einem akustischen Klassifikator, mittels dessen das Vorliegen einer Gesprächssituation mit mehreren Gesprächsteilnehmern an sich ermittelt wird, herangezogen, vorzugsweise um das Ergebnis zu verifizieren und/oder zu verbessern. Beispielsweise kann mittels des akustischen Klassifikators in einer Situation mit mehreren Unterhaltungen zwischen benachbart befindlichen Personen häufig nicht mit hinreichender Sicherheit festgestellt werden, welcher mittels eines Mikrofonsystems des Hörgeräts erfassten Sprachanteil zum Gespräch gehört.

Beispielsweise kann so in einem Restaurant nicht hinreichend sicher ermittelt werden, ob der Hörgeräteträger nur mit der Person gegenüber und rechts von sich ein Gespräch führt, oder ob die Personen links des Hörgeräteträgers ebenfalls Teilnehmer an diesem Gespräch sind. Anhand der Blickrichtungswahrscheinlichkeitsverteilung lässt sich vorteilhafterweise ermitteln, ob der Hörgeräteträger allen potentiellen Gesprächsteilnehmern den Kopf zuwendet oder nur einem Teil von diesen. In letzterem Fall ist die Wahrscheinlichkeit hoch, dass die anderen Personen nicht an diesem Gespräch teilnehmen.

Das erfindungsgemäße Hörgerät weist den vorstehend beschriebenen Beschleunigungssensor auf sowie einen Prozessor, der zur insbesondere selbsttätigen Durchführung des vorstehend beschriebenen Verfahrens eingerichtet ist.

Der Prozessor ist dabei optional als nicht-programmierbare elektronische Schaltung ausgebildet. Alternativ ist der Prozessor durch einen Mikrocontroller gebildet, in dem die Funktionalität zur Durchführung des erfindungsgemäßen Betriebsverfahrens in Form eines Softwaremoduls implementiert ist.

Die Konjunktion "und/oder" ist hier und im Folgenden insbesondere derart zu verstehen, dass die mittels dieser Konjunktion verknüpften Merkmale sowohl gemeinsam als auch als Alternativen zueinander ausgebildet sein können.

Nachfolgend werden Ausführungsbeispiele der Erfindung anhand einer Zeichnung näher erläutert. Darin zeigen:

Fig. 1    in einem schematischen Schaltbild ein Hörgerät,

Fig. 2    in einer schematischen Aufsicht von oben einen Kopf eines Hörgeräteträgers mit dem bestimmungsgemäß am Ohr getragenen Hörgerät,

Fig. 3    in einem schematischen Ablaufdiagramm ein Verfahren zum Betrieb des Hörgeräts,

Fig. 4    in drei übereinander dargestellten schematischen Diagrammen, jeweils einen Verlauf einer, einer von drei senkrecht aufeinander stehenden Messachsen eines Beschleunigungssensors des Hörgeräts zugeordneten Beschleunigung über der Zeit,

Fig. 5    in einem schematischen dreidimensionalen Diagramm die den drei Messachsen zugeordneten Beschleunigungen gegeneinander angetragen,

Fig. 6    in einer schematischen Darstellung einen Verfahrensschritt zur Ermittlung eines Korrekturwerts für die mittels des Beschleunigungssensors erfassten Beschleunigungsdaten, und

Fig. 7    in einem schematischen Polardiagramm eine Wahrscheinlichkeitsverteilung für eingenommene Blickrichtungen des Hörgeräteträgers.

Einander entsprechende Teile und Größen sind in allen Figuren stets mit gleichen Bezugszeichen versehen.

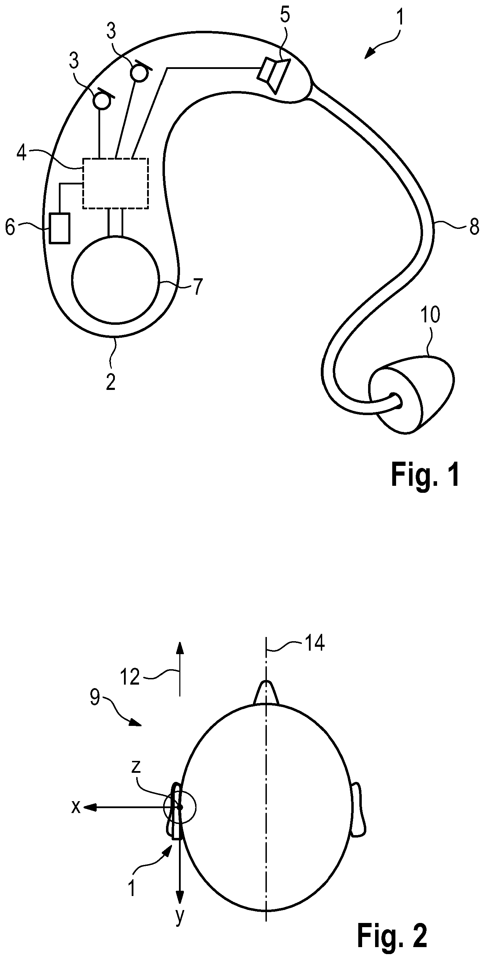

In Figur 1 ist ein Hörgerät 1, konkret ein sogenanntes Hinter-dem-Ohr-Hörgerät dargestellt. Das Hörgerät 1 umfasst ein (Hörgeräte-) Gehäuse 2, in dem mehrere elektronische Komponenten angeordnet sind. Als elektronische Komponenten umfasst das Hörgerät 1 zwei Mikrofone 3, die zur Detektion von Geräuschen aus der Umgebung des Hörgeräts 1 eingerichtet sind. Des Weiteren umfasst das Hörgerät 1 als elektronische Komponente einen Signalprozessor 4, der dazu eingerichtet ist, die mittels der Mikrofone 3 erfassten Geräusche zu verarbeiten und zur Ausgabe an das Gehör eines Hörgeräträgers an einen Lautsprecher 5 auszugeben. Zur Erfassung der räumlichen Lage des Hörgeräts 1 umfasst dieses außerdem einen Beschleunigungssensor 6, der mit dem Signalprozessor 4 verschaltet ist. Zur Energieversorgung dieser elektronischen Komponenten ist in dem Gehäuse 2 außerdem eine Batterie 7 angeordnet, die im vorliegenden Ausführungsbeispiel konkret durch einen Akkumulator gebildet ist. Zur Leitung des von dem Lautsprecher 5 erzeugten Schalls zum Gehör des Hörgeräteträgers ist an das Gehäuse 2 ein Schallschlauch 8 angeschlossen, der im bestimmungsgemäßen Tragezustand am Kopf 9, konkret am Ohr des Hörgeräträgers (vergleiche Figur 2) mit einem Ohrpassstück 10 in den Gehörgang des Hörgeräteträgers eingesetzt ist.

Der Beschleunigungssensor 6 ist zur dreidimensionalen Messung eingerichtet, und weist dazu drei senkrecht aufeinander stehende Messachsen x, y und z (s. Figur 2) auf. Der Beschleunigungssensor 6 ist dabei derart im Gehäuse 2 des Hörgeräts 1 angeordnet, dass im bestimmungsgemäßen Tragezustand am Kopf 9 und bei aufrechter Körperhaltung des Hörgeräteträgers die Messachse z zumindest näherungsweise mit der Vertikalrichtung zusammenfällt. Die Messachse x ist dabei radial zum Kopf 9, konkret radial nach außen gerichtet. Die Messachse y ist in diesem Fall tangential zum Kopf 9 und nach hinten ausgerichtet - d. h. parallel entgegengesetzt zu einer Null-Grad-Blickrichtung 12, die in einer Grundausrichtung parallel zu einer Sagittal-Ebene, konkret parallel zur Medianebene 14 ausgerichtet ist. Die beiden Messachsen x und y sind dabei einer Transversalebene der Hörgeräteträgers zugeordnet.

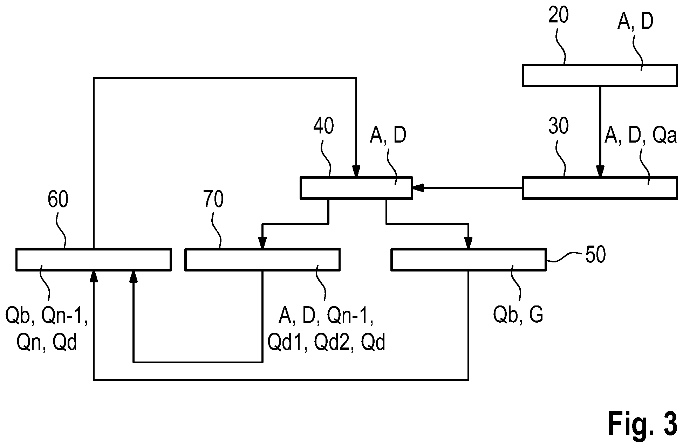

Der Signalprozessor 4 ist dazu eingerichtet, mittels eines akustischen Klassifikators, der als Algorithmus in dem Signalprozessor 4 implementiert ist, anhand der mittels der Mikrofone 3 erfassten Geräusche auf eine Gesprächssituation (d. h. auf einer Unterhaltung von wenigstens zwei Personen) zu schließen und daraufhin die Signalverarbeitung entsprechend anzupassen. Beispielsweise wird dazu ein Öffnungswinkel eines mittels der beiden Mikrofone 3 gebildeten Richtmikrofons derart eingestellt, dass alle aus der Umgebung auf die Mikrofone 3 treffenden Sprachanteile, konkret die Quellorte dieser Sprachanteile innerhalb des Öffnungsbereichs des Richtmikrofons liegen. Um die Signalverarbeitung in einer solchen Gesprächssituation noch präziser anpassen zu können, konkret den Öffnungswinkel so einstellen zu können, dass nur die tatsächlich am Gespräch beteiligten Personen (die jeweils einen Quellort eines Sprachanteils darstellen) innerhalb des Öffnungsbereichs des Richtmikrofons liegen, wird von dem Signalprozessor 4 ein nachfolgend anhand von Fig. 3 näher erläutertes Verfahren durchgeführt.

In einem ersten Verfahrensschritt 20 werden die von dem Beschleunigungssensor 6 ermittelten Messwerte - die zu Samples von jeweils drei Messwerten, von denen wiederum jeweils einer, einer der Messachsen x, y und z zugeordnet ist, ausgegeben werden - als "rohe" Beschleunigungsdaten A in einem Pufferspeicher (der im Signalprozessor 4 integriert ist) abgelegt. Der Pufferspeicher ist dabei zur gleitenden Zwischenspeicherung von acht solcher Samples ausgebildet, die jeweils ein Datenframe D bilden und über ein Zeitfenster von 1,3 Sekunden erfasst werden.

Die rohen Beschleunigungsdaten A enthalten unter anderem Informationen über eine Beschleunigung bei geradliniger, geradeaus (d. h. entlang der Meridianebene 14) gerichteter Bewegung (bspw. Gehen und dergleichen), über eine radial zum Kopf 9 gerichtete Beschleunigung (im Folgenden als "Radial-Beschleunigung ar" bezeichnet) und über eine tangential zum Kopf 9 gerichtete Beschleunigung (im Folgenden als "Tangential-Beschleunigung at" bezeichnet). Die Radial-Beschleunigung ar tritt aufgrund der Zentrifugalkraft bei einer Körper- und/oder Kopfdrehung - unabhängig von der Dreh- oder Rotationsrichtung und somit auch unabhängig von der zugeordneten Rotationsachse - auf. Die Tangential-Beschleunigung at tritt bei ebenfalls bei einer Rotation des Kopfs 9, konkret beim "Losdrehen" und "Abbremsen" des Kopfs 9 auf. Im Folgenden werden die Radial- und die Tangential-Beschleunigungen ar bzw. at in Bezug auf eine als "Gierbewegung" bezeichnete Rotation des Kopfs 9 um seine Hochachse, die etwa senkrecht auf der Transversalebene steht und als Rotationsachse in diesem Zusammenhang auch als "Gierachse" bezeichnet wird, verwendet und beschrieben. Aufgrund der vorstehend beschriebenen Zuordnung der Messachsen x und y zu der Transversalebene lassen sich unter gewisser Voraussetzung (konkret wenn eine Gierbewegung vorliegt) die der Messachse x zugeordneten Messwerte der Radial-Beschleunigung ar und die der Messachse y zugeordneten Messwerte entsprechend der Tangential-Beschleunigung at zuweisen. Außerdem enthalten die rohen Beschleunigungsdaten A einen Bias (oder: "Bias-Anteil"), der meist zeitlich fluktuiert aufgrund von Temperatureinflüssen, sowie Einflüsse unterschiedlicher Messsensitivität für die einzelnen Messachsen x, y und z. Außerdem enthalten die Beschleunigungsdaten A den Einfluss der Erdbeschleunigung g (auch: Gravitation).

In einem nachfolgenden Verfahrensschritt 30 werden die Messachsen x, y und z des Beschleunigungssensors 6, konkret also das Sensorkoordinatensystem auf das dem Kopf 9 zugeordnete Koordinatensystem normiert. Dazu wird - konkret während einer Anpassung des Hörgeräts 1 an den Hörgeräteträger - während einer Phase, in der der Kopf 9 in aufrechter Körperhaltung gerade aus (Blick entlang der Meridianebene 14) gehalten wird, das Skalar- und das Kreuzprodukt zwischen dem aus den Beschleunigungsdaten A ermittelten Gravitationsvektor und dem globalen, einem als "Welt-Koordinatensystem" bezeichneten, universalen Koordinatensystem zugeordneten Gravitationsvektor gw ermittelt,. Der globale Gravitationsvektor gw basiert dabei auf der Annahme, dass die Gravitation "nach oben" zeigt und somit die Form gw=[0, 0, 1] aufweist. Das Skalarprodukt gibt dabei einen Verkippungswinkel zwischen diesen Vektoren und das Kreuzprodukt eine Kippachse für diesen Verkippungswinkel wirksam ist, wieder. Mittels der Kippachse und des Verkippungswinkels wird anschließend ein Rotationsoperator, konkret eine als "Normierungs-Quaternion Qa" bezeichnete Quaternion konstruiert, die eine Verknüpfung des Sensorkoordinatensystems mit dem Welt-Koordinatensystem wiedergibt und mittels derer das Sensorkoordinatensystem und damit die rohen Beschleunigungsdaten A auf das Welt-Koordinatensystem verdreht ("normiert") werden. Die Normierungs-Quaternion Qa wird dabei auf Basis einer sogenannten Achsenwinkel-Darstellung konstruiert, nämlich dass nach Euler jede Drehung durch einen Winkel um eine feste Achse dargestellt werden kann:

$$Qa = \begin{pmatrix} \cos\frac{\theta}{2} \\ u_x \sin\frac{\theta}{2} \\ u_y \sin\frac{\theta}{2} \\ u_z \sin\frac{\theta}{2} \end{pmatrix} \qquad\qquad (1)$$

wobei $u_x$, $u_y$, $u_z$ die jeweilige Achse angeben.

Außerdem wird in einem optionalen Ausführungsbeispiel eine Kalibrierung, konkret eine Ellipsoid-Kalibrierung durchgeführt. Bei der Ellipsoid-Kalibrierung wird angenommen, dass die Norm des Vektors der Erdbeschleunigung g eins ergibt, so dass keine explizite Kenntnis der Ausrichtung der Messachsen x, y und z des Beschleunigungssensors 6 erforderlich ist. Andere Kalibrierungsverfahren, bei denen die tatsächliche Ausrichtung der Messachsen x, y und z des Beschleunigungssensors 6 ermittelt werden, können aber gleichermaßen eingesetzt werden. Beispielsweise werden zur Kalibrierung für spezifische Positionierungen des Hörgeräts 1 und somit der Messachsen x, y und z des Beschleunigungssensors 6 oder (bereits vor der Montage des Beschleunigungssensors 6 in dem Gehäuse 2) nur des Beschleunigungssensors 6 die jeweiligen, zugeordneten Beschleunigungsdaten A erfasst und daraus Kalibrierungsdaten für die Bias- und Sensitivitätseinflüsse bestimmt. Die spezifischen Positionen werden dabei meist mittels einer Handhabungsvorrichtung (auch: "Manipulator") "eingestellt". Die jeweiligen, den Positionen zugeordneten Messpunkte liegen dabei auf einer - üblicherweise aufgrund der unterschiedlichen Messsensitivitäten zu einem Ellipsoid deformierten, der Norm des Beschleunigungssignals zugeordneten Einheitskugel - dreidimensionalen Ellipsoidoberfläche. Durch diese Kalibrierung können die Bias- und Sensitivitätseinflüsse während eines "statischen" Datenframes (bei dem keine Bewegung erkannt wird) hinreichend präzise kompensiert werden.

Des Weiteren werden im Verfahrensschritt 30 die Beschleunigungsdaten A eines Datenframes D vorverarbeitet.

Dazu erfolgt eine Rauschreduktion mittels eines Medianfilters mit einer Fensterlänge von drei Samples, um Sensorrauschen und einzelne Signalspitzen herauszufiltern.

In einem weiteren Verfahrensschritt 40 werden die (nun vorverarbeiteten) Beschleunigungsdaten A innerhalb des jeweiligen Datenframes D analysiert und auf das Vorliegen einer Bewegung überprüft. Dazu wird ein Wertebereich der in dem Datenframe D enthaltenen Beschleunigungsdaten A, konkret der Abstand zwischen maximalen und minimalen Werten der Beschleunigungsdaten ermittelt. Zusätzlich (oder in einem abweichenden Ausführungsbeispiel alternativ) wird auch eine Varianz der Beschleunigungsdaten A eines jeden Datenframes D ermittelt. Über einen Schwellwertvergleich wird ermittelt, ob sich der Wertebereich und/oder die Varianz hinreichend von einem entsprechenden Wertebereich bzw. einem entsprechenden Varianzwert eines Messrauschens, das das Beschleunigungssignal bzw. die Beschleunigungsdaten A bei fehlender Bewegung des Hörgeräteträgers dominiert, abheben.

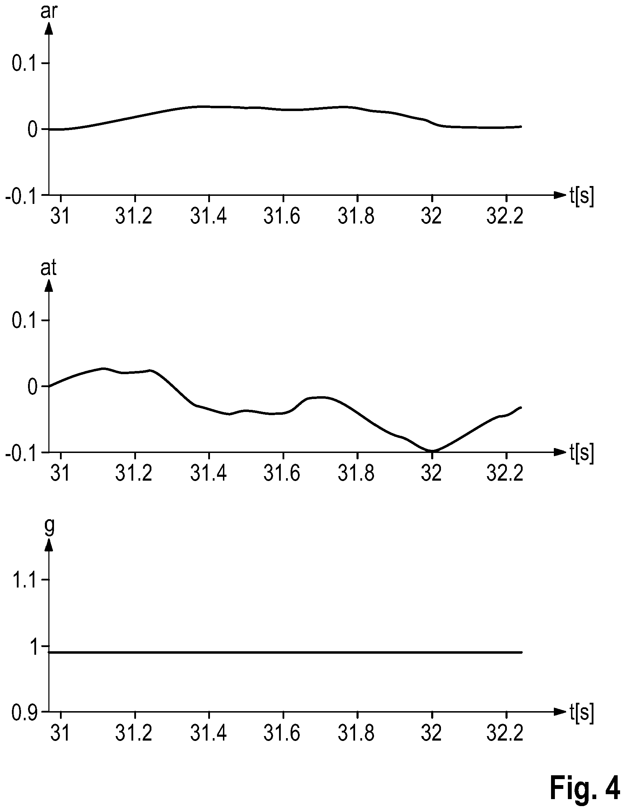

Für den Fall, dass eine Bewegung des Hörgeräteträgers erkannt wird, werden die Beschleunigungsdaten A in einem Verfahrensschritt 50 auf das Vorliegen einer Gierbewegung des Kopfs 9 untersucht. Bei einer Gierbewegung des Kopfs 9 (d.h. einer Rotation um eine auf der Transversalebene senkrecht stehende Achse, üblicherweise um die durch die Wirbelsäule gebildete Achse) zeigt sich der in Fig. 4 schematisch über der Zeit t abgebildete Verlauf der den (auf das Welt-Koordinatensystem normierten) Messachsen x, y und z zugeordneten Radial- und Tangential-Beschleunigungen ar, at, die die Zentrifugalkraft und die Tangentialkraft während der Gierbewegung repräsentieren, sowie der Erdbeschleunigung g, die hier positiv angetragen ist. Bei einer Gierbewegung nach links durchläuft die Tangential-Beschleunigung at ein erstes Extremum, das den Beginn der Gierbewegung anzeigt, und anschließend ein zweites Extremum mit entgegengesetztem Vorzeichen, das das Abbremsen des Kopfs 9 zum Ende der Gierbewegung anzeigt. Parallel zeigt die Radial-Beschleunigung ar für die Zentrifugalkraft ebenfalls ein einzelnes Extremum. Der Zeitraum der Gierbewegung liegt hier innerhalb von etwa 1,2 Sekunden. Bereits dieser Verlauf der Radial- und Tangential-Beschleunigungen ar und at wird in einem optionalen Ausführungsbeispiel als Kriterium für das Vorliegen der Gierbewegung herangezogen.

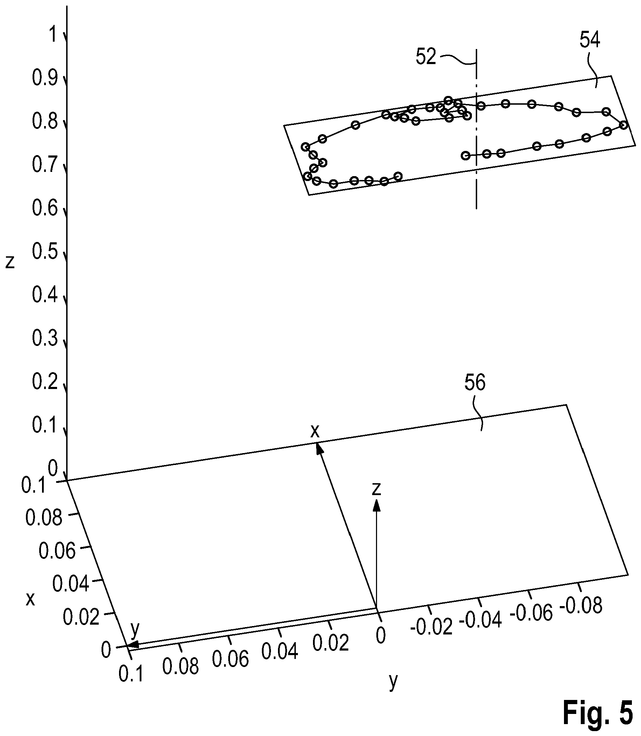

In Fig. 5 sind die für die Beschleunigungen ar, at und g erfassten Messwerte der Messachsen x, y und z dreidimensional gegeneinander angetragen. Wie zu erkennen ist, ergeben die Radial- und die Tangential-Beschleunigung ar bzw. at eine ellipsenartige Kurve, die um die Erdbeschleunigung g in der Messachse z verschoben ist. Im Verfahrensschritt 50 wird eine Kurve, konkret eine Ellipse auf den gegeneinander angetragenen Verlauf (die Beschleunigungskurve) der Radial- und Tangential-Beschleunigungen ar bzw. at gefittet und die Form als Kriterium für das Vorliegen der Gierbewegung herangezogen. Ist die Form der gefitteten Kurve hinreichend nah, konkret mit einem geringen Restfehler, an eine Ellipse angenähert, ist die Wahrscheinlichkeit für das Vorliegen einer Gierbewegung hoch. Andere Bewegungen äußern sich nämlich regelmäßig in einem unregelmäßigen - meist zick-zack-artigen - Verlauf der gegeneinander angetragenen Radial- und Tangential-Beschleunigungen ar und at. Die Fläche, konkret der Flächeninhalt der gefitteten Ellipse gibt dabei die Stärke der Gierbewegung wieder, d.h. wie schnell der Kopf 9 gedreht wird.

Anschließend wird für die gefittete Ellipse der Normalenvektor, konkret der im Schwerpunkt der Ellipsenfläche stehende Normalenvektor ermittelt. Dieser entspricht der Drehachse oder "Gierachse 52" der Gierbewegung. Wie in Fig. 5 zu erkennen ist, ist die Gierachse 52 gegenüber der Messachse z verkippt, und somit auch eine durch die Ellipsenfläche beschriebene und von den Radial- und Tangential-Beschleunigungen ar und at aufgespannte Bewegungsebene 54. Die Verkippung der Bewegungsebene 54 gegenüber einer von den Messachsen x und y aufgespannten Messebene 56 wird bestimmt - bspw. mittels des Skalar- und Kreuzprodukts der Gierachse 52 mit der Messachse z, konkret deren Achsenvektor. Mittels dieser Verkippungsinformation wird als Rotationsoperator zur Korrektur der Verkippung eine "Korrektur-Quaternion" zur "Richtigdrehung" der Bewegungsebene 54 parallel zur Messebene 56 erstellt, mittels dieser die Beschleunigungsdaten A parallel zu den Messachsen x, y, und z ausgerichtet (gedreht) und anschließend die gefittete Ellipse auf die Messebene 56 projiziert. Dadurch können die Beschleunigungsdaten A verlustarm auf die zweidimensionale Messebene 56 abgebildet werden.

Für den Fall, dass das Vorliegen der Gierbewegung erkannt wurde, wird die Tangential-Beschleunigung at zweifach integriert und somit die bei der Gierbewegung zurückgelegte Wegstrecke ermittelt. Durch den Radius des Kopfs 9 geteilt ergibt sich die aktuelle Winkelposition des Kopfs 9. Außerdem wird dabei der der aktuellen Winkelposition zugeordnete Gierwinkel G ermittelt. Aus der Winkelposition bzw. dem Gierwinkel G und der Gierachse 52 wird eine als "Bewegungs-Quaternion Qb" bezeichnete Quaternion konstruiert. Diese stellt wiederum einen Rotationsoperator dar, der die Bewegung des Kopfs repräsentiert.

In einem nachfolgenden Verfahrensschritt 60 wird mittels der in der Bewegungs-Quaternion Qb enthaltenen Bewegungsinformation ein einer vorhergehenden Ausrichtung des Kopfs 9 zugeordneter Orientierungs-Rotationsoperator, konkret eine "Orientierungs-Quaternion Qn-1" zu einer aktuellen Orientierungs-Quaternion Qn "geupdated", d.h. erneuert, indem die vorhergehende Orientierungs-Quaternion Qn-1 mit der Bewegungs-Quaternion Qb multipliziert wird. Als "erste" Orientierungs-Quaternion Qn wird zur Initialisierung eine Einheitsquaternion Qe angesetzt, d. h. als fiktiver "Startwert" angenommen. Diese weist die Form

$$Qe = \begin{pmatrix} 1 \\ 0 \\ 0 \\ 0 \end{pmatrix} \qquad\qquad (2)$$

auf.

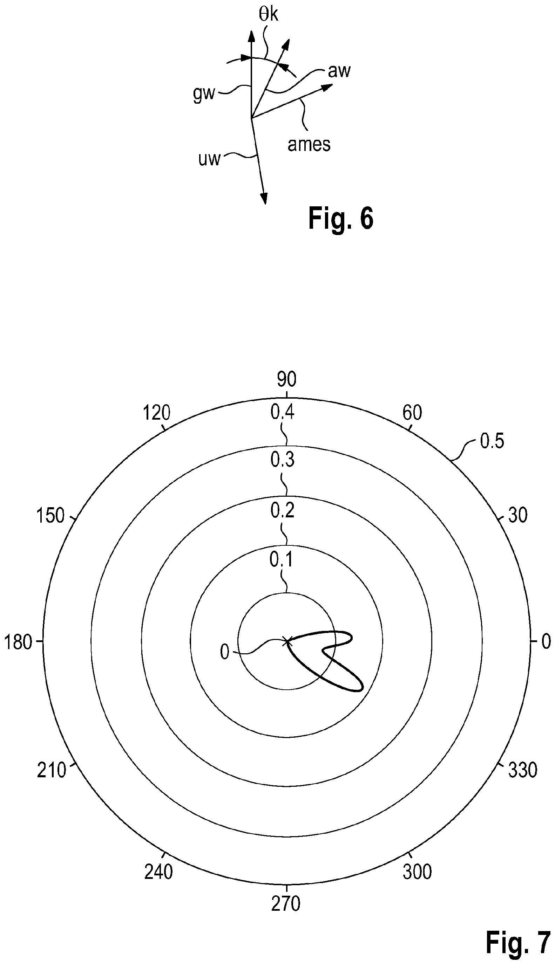

Wird im Verfahrensschritt 40 keine Bewegung erkannt, erfolgt in einem weiteren Verfahrensschritt 70 für den entsprechenden "statischen" Datenframe D eine Korrektur des Gierwinkels G, sowie eines Nick- und eines Rollwinkels des Kopfs 9. Zunächst wird hierzu der Einfluss der Erdbeschleunigung g aus den Beschleunigungsdaten A entfernt. Um Messrauschen in den Beschleunigungsdaten A zu verringern wird dann ein Mittelwert ames für diese ermittelt. Anschließend wird der Mittelwert ames, konkret der diesem zugeordnete Vektor mittels der für die vorhergehenden Datenframes D ermittelten Ausrichtung, konkret also mittels der vorstehend beschriebenen vorhergehenden Orientierungs-Quaternion Qn-1 rotiert. Um eine Restabweichung des daraus resultierenden gedrehten Mittelwertvektors aw von der Soll-Ausrichtung, vorgegeben durch den globalen Gravitationsvektor gw, zu ermitteln, wird das Skalarprodukt und das Kreuzprodukt zwischen dem resultierenden Mittelwertvektor aw und dem globalen Gravitationsvektor gw ermittelt. Das Skalarprodukt ergibt dabei einen Korrektur-Winkel θk und das Kreuzprodukt die Korrektur-Achse uw, um die eine Drehung mit dem Korrektur-Winkel θk erfolgen muss, um den resultierenden Mittelwertvektor aw mit dem globalen Gravitationsvektor gw zur Deckung zu bringen (vgl. Fig. 6). Hieraus wird anschließend eine Abweichungs-Quaternion Qd1 konstruiert.

Außerdem wird der Gierwinkel G während eines statischen Datenframes D vergleichsweise langsam in Richtung der Null-Grad-Blickrichtung 12 gedriftet. Dazu wird im Verfahrensschritt 70 basierend auf dem globalen Gravitationsvektor gw eine gierfreie Quaternion Qd2 ermittelt. D.h. diese gierfreie Quaternion Qd2 enthält nur die aktuellen Informationen der Nick- und Rollwinkel, während der Gierwinkel G auf null, also auf die Null-Grad-Blickrichtung 12 gesetzt ist. Die Null-Grad-Blickrichtung 12 muss also nicht (oder nicht mehr) mit der Sagittalebene zusammenfallen (d. h. parallel zur Medianebene 14 ausgerichtet sein=. Konkret wird diese gierfreie Quaternion Qd2 analog zu der vorstehend beschriebenen Abweichungs-Quaternion Qd1 ermittelt. Anschließend wird zwischen der gierfreien Quaternion Qd2 und der Abweichungs-Quaternion Qd1 sphärisch interpoliert, so dass, je länger keine Bewegung detektiert wird, der aktuelle Wert des Gierwinkels G null Grad angenähert wird. Mit anderen Worten wird die Null-Grad-Blickrichtung 12 von der Ausrichtung parallel zur Medianebene 14 zu der aktuellen Winkelposition des Kopfs 9 hin verschoben. Durch diese Interpolation wird eine neue Abweichungs-Quaternion Qd gebildet. Als Schrittweite bei dieser Interpolation werden dabei - abhängig von der gewünschten Dauer der Drift der Null-Grad-Blickrichtung 12 zu der aktuellen Winkelposition des Kopfs 9 hin - Werte zwischen beispielsweise 0,5 Prozent (langsame Drift) oder 2 Prozent (vergleichsweise schnelle Drift) angesetzt.

Im Verfahrensschritt 60 wird anschließend, analog zum vorstehend beschriebenen Update der vorhergehenden Orientierungs-Quaternion Qn-1 auf die aktuelle Orientierungs-Quaternion Qn die neue Abweichungs-Quaternion Qd (anstelle der Bewegungs-Quaternion Qb) herangezogen. Anschließend erfolgt für den nächsten Datenframe ein Rücksprung auf den Verfahrensschritt 40.

In einem nicht näher dargestellten Verfahrensschritt wird anhand des jeweiligen aktuellen Gierwinkels G eine Blickrichtungswahrscheinlichkeitsverteilung erstellt (s. Fig. 7), indem für jeden aktuellen Gierwinkel G eine Gauss'sche Normalverteilung mit einer Standardabweichung von z. B. 10 Grad angesetzt wird. Für jeden Gierwinkel G, entlang dem der Hörgeräteträger seinen Blick ausgerichtet hat, enthält die Blickrichtungswahrscheinlichkeitsverteilung somit einen "Peak", so dass sich ablesen lässt, wo der Hörgeräteträger bspw. in der letzten Minute hingeblickt hat. Um ein "Vergessen" oder "Verblassen" vergleichsweise "alter" (bspw. älter als 1 bis 3 Minuten) vom Kopf 9 eingenommener Gierwinkel G zu ermöglichen, werden in einem optionalen Ausführungsbeispiel vor jedem neuen Eintrag in die Blickrichtungswahrscheinlichkeitsverteilung die vorhergehenden Wahrscheinlichkeitswerte einheitlich herabgesetzt. Die neue Normalverteilung wird entsprechend gewichtet eingetragen, so dass alle Winkelpositionen kumuliert eins ergeben. Mittels der Blickrichtungswahrscheinlichkeitsverteilung lässt sich abschätzen, ob der Hörgeräteträger an einem Gespräch mit mehreren Personen, dann würde er mehrfach seinen Blick zwischen einzelnen Gierwinkeln G gewechselt haben, teilnimmt, oder ob er "nur" in eine Richtung blickt. Diese Information wird von dem Signalprozessor 4 zur Einstellung einer Richtwirkung der Mikrofone 3 herangezogen.

Der Gegenstand der Erfindung ist nicht auf die vorstehend beschriebenen Ausführungsbeispiele beschränkt. Vielmehr können im Rahmen des Schutzbereichs der Ansprüche weitere Ausführungsformen der Erfindung von dem Fachmann aus der vorstehenden Beschreibung abgeleitet werden. Insbesondere können im Rahmen des Schutzbereichs der Ansprüche die anhand der verschiedenen Ausführungsbeispiele beschriebenen Einzelmerkmale der Erfindung und deren Ausgestaltungsvarianten auch in anderer Weise miteinander kombiniert werden.

Bezugszeichenliste

1    Hörgerät

| | |
|---|---|
| 2 | Gehäuse |
| 3 | Mikrofon |
| 4 | Signalprozessor |
| 5 | Lautsprecher |
| 6 | Beschleunigungssensor |
| 7 | Batterie |
| 8 | Schallschlauch |
| 9 | Kopf |
| 10 | Ohrstück |
| 12 | Null-Grad-Blickrichtung |
| 14 | Medianebene |
| 20 | Verfahrensschritt |
| 30 | Verfahrensschritt |
| 40 | Verfahrensschritt |
| 50 | Verfahrensschritt |
| 52 | Gierachse |
| 54 | Bewegungsebene |
| 56 | Messebene |
| 60 | Verfahrensschritt |
| 70 | Verfahrensschritt |

| | |
|---|---|
| A | Beschleunigungsdaten |
| ames | Mittelwert |
| ar | Radial-Beschleunigung |
| at | Tangential-Beschleunigung |
| aw | resultierender Mittelwertvektor |
| D | Datenframe |
| G | Gierwinkel |
| g | Erdbeschleunigung |
| gw | globaler Gravitationsvektor |
| Qa | Normierungs-Quaternion |
| Qb | Bewegungs-Quaternion |
| Qd, Qd1 | Abweichungs-Quaternion |
| Qd2 | gierfreie Quaternion |
| Qe | Einheitsquaternion |
| Qn, Qn-1 | Orientierungs-Quaternion |
| t | Zeit |
| $\theta k$ | Korrektur-Winkel |
| uw | Korrektur-Achse |
| x, y, z | Messachse |

**Patentansprüche**

1. Verfahren zum Betrieb eines Hörgeräts (1), das einen Beschleunigungssensor (6) aufweist, der im bestimmungsgemäßen Tragezustand am Kopf (9) eines Hörgeräteträgers positioniert und der zur Messung in drei senkrecht aufeinander stehenden Messachsen (x,y,z) eingerichtet ist, wobei verfahrensgemäß

   - anhand von durch ein Beschleunigungssignal transportierte Beschleunigungsdaten (A) des Beschleunigungssensors (6) auf eine Bewegung des Hörgeräteträgers geschlossen wird,
   - aus den Beschleunigungsdaten (A) eine Bewegungsebene (54) der Bewegung des Hörgeräteträgers abgeleitet wird,
   - aus den Beschleunigungsdaten (A) eine Bewegungsachse (52) und eine Bewegungsrichtung der Bewegung ermittelt werden, und
   - anhand der Bewegungsebene (54), der Bewegungsachse (52) und der Bewegungsrichtung auf ein Vorliegen einer Rotationsbewegung des Kopfs (9) geschlossen wird.

2. Verfahren nach Anspruch 1,

wobei als Vorliegen der Rotationsbewegung das Vorliegen einer Gierbewegung herangezogen wird.

3.  Verfahren nach Anspruch 1 oder 2,
    wobei die Beschleunigungsdaten (A) blockweise in aufeinanderfolgenden Datenframes (D) analysiert werden.

4.  Verfahren nach einem der Ansprüche 1 bis 3,
    wobei als Merkmal für das Vorliegen der Bewegung des Hörgeräteträgers ein Wertebereich und/oder eine Varianz des Beschleunigungssignals herangezogen werden.

5.  Verfahren nach einem der Ansprüche 1 bis 4,
    wobei im bestimmungsgemäßen Tragezustand des Hörgeräts (1) aus den Beschleunigungsdaten (A) ein für eine Verdrehung der Messachsen (x,y,z) des Beschleunigungssensors (6) gegenüber einer Transversalebene des Körpers des Hörgeräteträgers und/oder einer Horizontalebene indikativer Normierungs-Rotationsoperator (Qa) ermittelt wird.

6.  Verfahren nach Anspruch 5,
    wobei die Verdrehung der Messachsen (x,y,z) anhand des Kreuzprodukts und des Skalarprodukts zwischen dem aus den Beschleunigungsdaten (A) ermittelten Gravitationsvektor und einem globalen Gravitationsvektor (gw) ermittelt wird, wobei der globale Gravitationsvektor (gw) einem als allgemeingültig angenommenen Welt-Koordinatensystem zugeordnet wird, in dem der globale Gravitationsvektor (gw) als nach oben weisend angenommen wird.

7.  Verfahren nach einem der Ansprüche 1 bis 6,
    wobei die Beschleunigungsdaten (A) geglättet werden.

8.  Verfahren nach einem der Ansprüche 1 bis 7,
    wobei zur Bestimmung der Rotationsbewegung des Kopfs (9) aus den Beschleunigungsdaten (A) eine für die Rotationsbewegung radial zum Kopf (9) des Hörgeräteträgers gerichtete Beschleunigung (ar) und eine tangential gerichtete Beschleunigung (at) abgeleitet werden.

9.  Verfahren nach Anspruch 8,
    wobei die Bewegungsebene (54) aus der radial gerichteten Beschleunigung (ar) und der tangential gerichteten Beschleunigung (at) konstruiert wird, und wobei die Bewegungsebene (54) derart gedreht wird, dass sie parallel zu einer von den zwei zur Ermittlung der radial gerichteten Beschleunigung (ar) und der tangential gerichteten Beschleunigung (at) herangezogenen Messachsen (x,y,z) aufgespannten Messebene (56) ausgerichtet ist.

10. Verfahren nach Anspruch 9,
    wobei für die Drehung der Bewegungsebene (54) die Verkippung der Bewegungsebene (54) gegenüber der Messebene (56) ermittelt wird, indem eine Ellipse in einen gegeneinander aufgetragenen Verlauf der radial gerichteten Beschleunigung (ar) und der tangential gerichteten Beschleunigung (at) gefittet wird, ein Normalenvektor der Ellipsenfläche als Bewegungsachse (52) angenommen und für den Normalenvektor ein Kippwinkel gegenüber der Messebene (56) ermittelt wird.

11. Verfahren nach Anspruch 10,
    wobei mittels der Bewegungsebene (54) ein Bewegungs-Rotationsoperator (Qb) für die aktuelle Bewegung des Kopfs (9) des Hörgeräteträgers konstruiert wird, indem anhand der tangential gerichteten Beschleunigung (at) ein Rotationswinkel (G) der Rotationsbewegung des Kopfs (9) ermittelt wird.

12. Verfahren nach Anspruch 11,
    wobei anhand der tangential gerichteten Beschleunigung (at) nur dann, wenn das Vorliegen der Rotationsbewegung erkannt wird, der Rotationswinkel (G) der Rotationsbewegung des Kopfs (9) ermittelt wird.

13. Verfahren nach einem der Ansprüche 10 bis 12,
    wobei als Merkmal für das Vorliegen der Rotationsbewegung des Kopfs (9) eine Fläche der Ellipse ermittelt und in Abhängigkeit von der Ausprägung des Merkmals auf das Vorliegen der Rotationsbewegung geschlossen wird.

14. Verfahren nach einem der Ansprüche 9 bis 13,
    wobei als Merkmal für das Vorliegen der Rotationsbewegung des Kopfs (9) des Hörgeräteträgers aus der tangential gerichteten Beschleunigung (at) eine zugeordnete Intensität und/oder eine Intensität einer Tangential-Geschwindigkeit abgeleitet wird.

15. Verfahren nach einem der Ansprüche 1 bis 14,
wobei für den Fall, dass keine Bewegung des Hörgeräteträgers erkannt wird, eine Korrektur eines Nickwinkels und/oder eines Rollwinkels des Kopfs (9),
deren zugeordnete Rotationsachsen jeweils zumindest grob in der Transversalebene liegen, durchgeführt wird.

16. Verfahren nach Anspruch 15,
wobei die Beschleunigungsdaten (A) des aktuellen Datenframes (D) mittels der Ausrichtungsinformation des vorausgehenden Datenframes (D) rotiert werden, und wobei für die derart rotierten Beschleunigungsdaten (A) jeweils mittels des Kreuzprodukts und des Skalarprodukts eine Restabweichung der Ausrichtung im Vergleich zu dem vorausgegangenen Datenframe (D) ermittelt wird.

17. Verfahren nach Anspruch 16,
wobei ein Abweichungs-Rotationsoperator (Qd1) mittels der Restabweichung konstruiert wird.

18. Verfahren nach einem der Ansprüche 15 bis 17,
wobei für den Fall, dass keine Bewegung des Hörgeräteträgers erkannt wird, eine Korrektur eines der Gierbewegung zugeordneten Gierwinkels (G) durchgeführt wird, indem eine Hauptblickrichtung (12) des Hörgeräteträgers von der Medianebene (14) des Körpers des Hörgeräteträgers weg zu einer aktuellen Blickrichtung hin angeglichen wird.

19. Verfahren nach Anspruch 16 und 18,
wobei ein gierfreier Rotationsoperator (Qd2), bei dem der Gierwinkel (G) auf null Grad gesetzt wird, auf Basis des globalen Gravitationsvektors (gw) ermittelt wird, und wobei zwischen dem gierfreien Rotationsoperator (Qd2) und dem Abweichungs- Rotationsoperator (Qd1) zur Bildung eines neuen Abweichungs- Rotationsoperators (Qd) sphärisch interpoliert wird.

20. Verfahren nach einem der Ansprüche 11, 17 oder 19,
wobei für die aktuelle Ausrichtung des Kopfs (9) ein neuer Orientierungs- Rotationsoperator (Qn) ermittelt wird, indem ein vorausgehender Orientierungs-Rotationsoperator (Qn-1) mit dem Bewegungs- Rotationsoperator (Qb) oder mit dem Abweichungs- Rotationsoperator (Qd,Qd1) verrechnet wird.

21. Verfahren nach einem der Ansprüche 5, 11, 19 oder 20,
wobei als Rotationsoperator jeweils eine korrespondierende Quaternion (Qa,Qb,Qd,Qd1,Qd2,Qn, Qn-1) ermittelt wird.

22. Verfahren nach Anspruch 20 oder 21,
wobei auf Basis des Orientierungs- Rotationsoperators (Qn) eine Blickrichtungswahrscheinlichkeitsverteilung erstellt wird.

23. Verfahren nach Anspruch 22,
wobei ausgehend von der Hauptblickrichtung eine Gauss'sche Normalverteilung mit einer vorgegebenen Standardabweichung angenommen wird, und wobei für eine aktuelle Gierposition eine neue Normalverteilung mit vorgegebener Standardabweichung gesetzt wird.

24. Verfahren nach Anspruch 10 und 23,
wobei die Standardabweichung in Abhängigkeit von einem Restfehler der Bestimmung der Bewegungsebene (54) variabel vorgegeben wird.

25. Verfahren nach einem der Ansprüche 1 bis 24,
wobei die Information über die Rotationsbewegung des Kopfs (9) des Hörgeräteträgers zur Anpassung eines Signalverarbeitungsalgorithmus für eine Gruppengesprächssituation herangezogen wird.

26. Hörgerät (1) mit einem Beschleunigungssensor (6), der im bestimmungsgemäßen Tragezustand am Kopf (9) eines Hörgeräteträgers positioniert und der zur Messung in drei senkrecht aufeinander stehenden Messachsen (x,y,z) eingerichtet ist, und mit einem Prozessor (4), der zur Durchführung des Verfahrens nach einem der Ansprüche 1 bis 25 eingerichtet ist.

**Claims**

1.  Method for operating a hearing device (1), which has an acceleration sensor (6) which is positioned on the head (9) of a hearing device wearer in the intended worn state and which is designed for measuring along three mutually perpendicular measurement axes (x, y, z), wherein, according to the method:

    - a movement of the hearing device wearer is deduced on the basis of acceleration data (A) of the acceleration sensor (6) that are transported by an acceleration signal,
    - a movement plane (54) of the movement of the hearing device wearer is derived from the acceleration data (A),
    - a movement axis (52) and a movement direction of the movement are ascertained from the acceleration data (A), and
    - an occurrence of a rotational movement of the head (9) is deduced on the basis of the movement plane (54), the movement axis (52) and the movement direction.

2.  Method according to Claim 1,
    wherein the occurrence of a yawing movement is used as the occurrence of the rotational movement.

3.  Method according to Claim 1 or 2,
    wherein the acceleration data (A) are analyzed block by block in successive data frames (D).

4.  Method according to one of Claims 1 to 3,
    wherein a range of values and/or a variance of the acceleration sensor is used as a feature for the occurrence of the movement of the hearing device wearer.

5.  Method according to one of Claims 1 to 4,
    wherein a normalization rotation operator (Qa) indicative of a rotation of the measurement axes (x, y, z) of the acceleration sensor (6) with respect to a transversal plane of the body of the hearing device wearer and/or a horizontal plane is ascertained from the acceleration data (A) in the intended worn state of the hearing device (1).

6.  Method according to Claim 5,
    wherein the rotation of the measurement axes (x, y, z) is ascertained on the basis of the cross product and the scalar product between the gravitation vector ascertained from the acceleration data (A) and a global gravitation vector (gw), wherein the global gravitation vector (gw) is assigned to a world coordinate system assumed to be generally applicable, in which the global gravitation vector (gw) is assumed to be pointing upwards.

7.  Method according to one of Claims 1 to 6,
    wherein the acceleration data (A) are smoothed.

8.  Method according to one of Claims 1 to 7,
    wherein an acceleration (ar) directed radially with respect to the head (9) of the hearing device wearer for the rotational movement and a tangentially directed acceleration (at) are derived for the determination of the rotational movement of the head (9) from the acceleration data (A).

9.  Method according to Claim 8,
    wherein the movement plane (54) is constructed from the radially directed acceleration (ar) and the tangentially directed acceleration (at), and wherein the movement plane (54) is rotated in such a way that it is aligned parallel to a measurement plane (56) defined by the two measurement axes (x, y, z) used for ascertaining the radially directed acceleration (ar) and the tangentially directed acceleration (at).

10. Method according to Claim 9,
    wherein, for the rotation of the movement plane (54), the tilting of the movement plane (54) with respect to the measurement plane (56) is ascertained by fitting an ellipse into a characteristic of the radially directed acceleration (ar) and the tangentially directed acceleration (at) plotted against one another, assuming a normal vector of the area of the ellipse as a movement axis (52) and ascertaining a tilting angle with respect to the measurement plane (56) for the normal vector.

11. Method according to Claim 10,
    wherein a movement rotation operator (Qb) for the current movement of the head (9) of the hearing device wearer is constructed by means of the movement plane (54) by ascertaining a rotation angle (G) of the rotational movement of the head (9) on the basis of the tangentially directed acceleration (at).

12. Method according to Claim 11,
wherein the rotation angle (G) of the rotational movement of the head (9) is only ascertained on the basis of the tangentially directed acceleration (at) if the occurrence of the rotational movement is detected.

13. Method according to one of Claims 10 to 12,
wherein an area of an ellipse is ascertained as a feature for the occurrence of the rotational movement of the head (9) and the occurrence of the rotational movement is deduced on the basis of the manifestation of the feature.

14. Method according to one of Claims 9 to 13,
wherein an assigned intensity and/or an intensity of a tangential velocity is derived from the tangentially directed acceleration (at) as a feature for the occurrence of the rotational movement of the head (9) of the hearing device wearer.

15. Method according to one of Claims 1 to 14,
wherein, in the case where no movement of the hearing device wearer is detected, a correction of a yawing angle and/or rolling angle of the head (9) of which the assigned rotation axes respectively lie at least approximately in the transversal plane is carried out.

16. Method according to Claim 15,
wherein the acceleration data (A) of the current data frame (D) are rotated by means of the alignment information of the preceding data frame (D), and wherein, for the acceleration data (A) rotated in such a way, a residual deviation of the alignment in comparison with the preceding data frame (D) is ascertained in each case by means of the cross product and the scalar product.

17. Method according to Claim 16,
wherein a deviation rotation operator (Qd1) with the residual deviation is constructed.

18. Method according to one of Claims 15 to 17,
wherein, in the case where no movement of the hearing device wearer is detected, a correction of a yawing angle (G) assigned to the yawing movement is carried out by adjusting a main viewing direction (12) of the hearing device wearer away from a median plane (14) of the body of the hearing device wearer towards a current viewing direction.

19. Method according to Claims 16 and 18,
wherein a yaw-free rotation operator (Qd2), with which the yawing angle (G) is set to zero degrees, is ascertained on the basis of the global gravitation vector (gw), and wherein a spherical interpolation is performed between the yaw-free rotation operator (Qd2) and the deviation rotation operator (Qd1) to form a new deviation rotation operator (Qd).

20. Method according to one of Claims 11, 17 and 19,
wherein a new orientation rotation operator (Qn) is ascertained for the current alignment of the head (9) by offsetting a previous orientation rotation operator (Qn-1) against the movement rotation operator (Qb) or against the deviation rotation operator (Qd, Qd1).

21. Method according to one of Claims 5, 11, 19 and 20,
wherein a corresponding quaternion (Qa, Qb, Qd, Qd1, Qd2, Qn, Qn-1) is ascertained in each case as the rotation operator.

22. Method according to Claim 20 or 21,
wherein a viewing-direction probability distribution is created on the basis of the orientation rotation operator (Qn).

23. Method according to Claim 22,
wherein a Gaussian normal distribution with a prescribed standard deviation is assumed from the main viewing direction, and wherein a new normal distribution with a prescribed standard deviation is set for a current yawing position.

**24.** Method according to Claims 10 and 23,
wherein the standard deviation is variably prescribed in dependence on a residual error of the determination of the movement plane (54).

**25.** Method according to one of Claims 1 to 24,
wherein the information concerning the rotational movement of the head (9) of the hearing device wearer is used for adapting a signal processing algorithm for a group discussion situation.

**26.** Hearing device (1) comprising an acceleration sensor (6) which is positioned on the head (9) of a hearing device wearer in the intended worn state and which is designed for measuring along three mutually perpendicular measurement axis (x, y, z), and comprising a processor (4), which is designed for carrying out the method according to one of Claims 1 to 25.

**Revendications**

**1.** Procédé permettant de faire fonctionner une prothèse auditive (1) qui présente un capteur d'accélération (6) qui, lorsqu'il est porté correctement, est positionné au niveau de la tête (9) d'un porteur de prothèse auditive et qui est conçu pour effectuer des mesures selon trois axes de mesure (x, y, z) perpendiculaires les uns aux autres, dans lequel selon le procédé

- des données d'accélération (A) du capteur d'accélération (6), transportées par un signal d'accélération, permettent de conclure à un mouvement du porteur de prothèse auditive,
- un plan de mouvement (54) du mouvement du porteur de prothèse auditive est dérivé des données d'accélération (A),
- un axe de mouvement (52) et une direction de mouvement du mouvement sont établis à partir des données d'accélération (A), et
- le plan de mouvement (54), l'axe de mouvement (52) et la direction de mouvement permettent de conclure à une présence d'un mouvement rotatif de la tête (9).

**2.** Procédé selon la revendication 1, dans lequel la présence d'un mouvement de lacet est utilisée comme présence du mouvement rotatif.

**3.** Procédé selon la revendication 1 ou 2, dans lequel les données d'accélération (A) sont analysées par blocs dans des trames de données (D) consécutives.

**4.** Procédé selon l'une quelconque des revendications 1 à 3, dans lequel une plage de valeurs et/ou une variance du signal d'accélération sont utilisées comme caractéristique de la présence du mouvement du porteur de prothèse auditive.

**5.** Procédé selon l'une quelconque des revendications 1 à 4, dans lequel, lorsque la prothèse auditive (1) est portée correctement, on établit à partir des données d'accélération (A) un opérateur de rotation de normalisation (Qa) indiquant une rotation des axes de mesure (x, y, z) du capteur d'accélération (6) par rapport à un plan transversal du corps du porteur de prothèse auditive et/ou à un plan horizontal.

**6.** Procédé selon la revendication 5, dans lequel la rotation des axes de mesure (x, y, z) est établie à l'aide du produit vectoriel et du produit scalaire entre le vecteur de gravitation établi à partir des données d'accélération (A) et un vecteur de gravitation global (gw), dans lequel le vecteur de gravitation global (gw) est associé à un système de coordonnées mondial considéré comme universel dans lequel le vecteur de gravitation global (gw) est considéré comme étant dirigé vers le haut.

**7.** Procédé selon l'une quelconque des revendications 1 à 6, dans lequel les données d'accélération (A) sont lissées.

**8.** Procédé selon l'une quelconque des revendications 1 à 7, dans lequel, pour déterminer le mouvement rotatif de la tête (9) à partir des données d'accélération (A), une accélération dirigée radialement (ar) par rapport à la tête (9) du porteur de prothèse auditive et une accélération dirigée tangentiellement (at) sont dérivées.

**9.** Procédé selon la revendication 8, dans lequel le plan de mouvement (54) est construit à partir de l'accélération dirigée radialement (ar) et de l'accélération dirigée tangentiellement (at), et dans lequel on fait pivoter le plan de mouvement (54) de telle sorte qu'il est aligné en parallèle à un plan de mesure (56) défini par les deux axes de mesure (x, y, z) utilisés pour l'établissement de l'accélération dirigée radialement (ar) et de l'accélération dirigée tangentiellement (at).

10. Procédé selon la revendication 9, dans lequel pour la rotation du plan de mouvement (54), le basculement du plan de mouvement (54) par rapport au plan de mesure (56) est établi en ce qu'une ellipse est ajustée dans un tracé, représenté l'un par rapport à l'autre, de l'accélération dirigée radialement (ar) et de l'accélération dirigée tangentiellement (at), un vecteur normal à la surface d'ellipse est considéré comme axe de mouvement (52), et un angle de basculement par rapport au plan de mesure (56) est établi pour le vecteur normal.

11. Procédé selon la revendication 10, dans lequel au moyen du plan de mouvement (54), un opérateur de rotation de mouvement (Qb) pour le mouvement actuel de la tête (9) du porteur de prothèse auditive est construit en ce qu'un angle de rotation (G) du mouvement rotatif de la tête (9) est établi à l'aide de l'accélération dirigée tangentiellement (at).

12. Procédé selon la revendication 11, dans lequel à l'aide de l'accélération dirigée tangentiellement (at), l'angle de rotation (G) du mouvement rotatif de la tête (9) n'est établi que si la présence du mouvement rotatif est identifiée.

13. Procédé selon l'une quelconque des revendications 10 à 12, dans lequel comme caractéristique de la présence du mouvement rotatif de la tête (9), une superficie de l'ellipse est établie, et on conclut à la présence du mouvement rotatif en fonction du degré de la caractéristique.

14. Procédé selon l'une quelconque des revendications 9 à 13, dans lequel comme caractéristique de la présence du mouvement rotatif de la tête (9) du porteur de prothèse auditive, une intensité associée et/ou une intensité d'une vitesse tangentielle est/sont dérivée (s) de l'accélération dirigée tangentiellement (at).

15. Procédé selon l'une quelconque des revendications 1 à 14, dans lequel, au cas où aucun mouvement du porteur de prothèse auditive ne serait identifié, une correction d'un angle de tangage et/ou d'un angle de roulis de la tête (9), dont les axes de rotation associés se situent respectivement au moins approximativement dans le plan transversal, est effectuée.

16. Procédé selon la revendication 15, dans lequel on fait pivoter les données d'accélération (A) de la trame de données actuelle (D) au moyen de l'information d'alignement de la trame de données précédente (D), et dans lequel pour les données d'accélération (A) ainsi pivotées, un écart résiduel de l'alignement en comparaison avec la trame de données précédente (D) est établi respectivement au moyen du produit vectoriel et du produit scalaire.

17. Procédé selon la revendication 16, dans lequel un opérateur de rotation d'écart (Qd1) est construit au moyen de l'écart résiduel.

18. Procédé selon l'une quelconque des revendications 15 à 17, dans lequel au cas où aucun mouvement du porteur de prothèse auditive ne serait identifié, une correction d'un angle de lacet (G) associé au mouvement de lacet est effectuée en ce qu'une direction de visée principale (12) du porteur de prothèse auditive est compensée en s'éloignant du plan médian (14) du corps du porteur de prothèse auditive vers une direction de visée actuelle.

19. Procédé selon la revendication 16 et 18, dans lequel un opérateur de rotation exempt de lacet (Qd2), dans lequel l'angle de lacet (G) est mis à zéro degré, est établi sur la base du vecteur de gravitation global (gw), et dans lequel entre l'opérateur de rotation exempt de lacet (Qd2) et l'opérateur de rotation d'écart (Qd1), une interpolation sphérique est effectuée pour former un nouvel opérateur de rotation d'écart (Qd).

20. Procédé selon l'une quelconque des revendications 11, 17 ou 19, dans lequel pour l'alignement actuel de la tête (9), un nouvel opérateur de rotation d'orientation (Qn) est établi en ce qu'un opérateur de rotation d'orientation précédent (Qn-1) est calculé avec l'opérateur de rotation de mouvement (Qb) ou avec l'opérateur de rotation d'écart (Qd, Qd1).

21. Procédé selon l'une quelconque des revendications 5, 11, 19 ou 20, dans lequel respectivement un quaternion correspondant (Qa, Qb, Qd, Qd1, Qd2, Qn, Qn-1) est établi comme opérateur de rotation.

**22.** Procédé selon la revendication 20 ou 21, dans lequel une distribution de probabilité de direction de visée est établie sur la base de l'opérateur de rotation d'orientation (Qn).

**23.** Procédé selon la revendication 22, dans lequel, en partant de la direction de visée principale, une distribution normale de Gauss avec un écart type prédéfini est considérée, et dans lequel une nouvelle distribution normale avec un écart type prédéfini est fixée pour une position de lacet actuel.

**24.** Procédé selon la revendication 10 et 23, dans lequel l'écart type est prédéfini de manière variable en fonction d'une erreur résiduelle de la détermination du plan de mouvement (54).

**25.** Procédé selon l'une quelconque des revendications 1 à 24, dans lequel l'information concernant le mouvement rotatif de la tête (9) du porteur de prothèse auditive est utilisée pour adapter un algorithme de traitement de signal pour une situation de conversation de groupe.

**26.** Prothèse auditive (1) comprenant un capteur d'accélération (6) qui, lorsqu'il est porté correctement, est positionné au niveau de la tête (9) d'un porteur de prothèse auditive, et qui est conçu pour effectuer des mesures selon trois axes de mesure (x, y, z) perpendiculaires les uns aux autres, et comprenant un processeur (4) qui est conçu pour exécuter le procédé selon l'une quelconque des revendications 1 à 25.

**Fig. 1**

**Fig. 2**

Fig. 3

Fig. 4

**Fig. 5**

Fig. 6

Fig. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102015219572 A1